(19) Europäisches Patentamt
European Patent Office
Office européen des brevets

(11) **EP 3 341 431 B1**

(12) **EUROPÄISCHE PATENTSCHRIFT**

(45) Veröffentlichungstag und Bekanntmachung des Hinweises auf die Patenterteilung:
**16.10.2019 Patentblatt 2019/42**

(51) Int Cl.:
***C08G 65/26*** (2006.01)

(21) Anmeldenummer: **16754509.4**

(22) Anmeldetag: **23.08.2016**

(86) Internationale Anmeldenummer:
**PCT/EP2016/069878**

(87) Internationale Veröffentlichungsnummer:
**WO 2017/032768 (02.03.2017 Gazette 2017/09)**

(54) **VERFAHREN ZUR HERSTELLUNG VON HOCHMOLEKULAREN POLYOXYALKYLENPOLYOLEN**

PROCESS FOR MANUFACTURING HIGH-MOLECULAR WEIGHT POLYOXYALKYLENE POLYOLS

PROCEDE DESTINE A LA FABRICATION DE POLYOXYALKYLENE-POLYOLS HAUTEMENT MOLECULAIRES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.08.2015 EP 15182451**

(43) Veröffentlichungstag der Anmeldung:
**04.07.2018 Patentblatt 2018/27**

(73) Patentinhaber: **Covestro Deutschland AG**
**51373 Leverkusen (DE)**

(72) Erfinder:
• **LORENZ, Klaus**
**41539 Dormagen (DE)**
• **STEINLEIN, Christian**
**40882 Ratingen (DE)**
• **ZWICK, Horst**
**41539 Dormagen (DE)**
• **BODENMUELLER, Markus**
**47807 Krefeld (DE)**
• **ECKELMANN, Stephan**
**50259 Pulheim (DE)**
• **BAER, Friedhelm**
**41540 Dormagen (DE)**

(74) Vertreter: **Levpat**
**c/o Covestro AG**
**Gebäude 4825**
**51365 Leverkusen (DE)**

(56) Entgegenhaltungen:
**EP-A1- 0 868 468       EP-A1- 2 840 103**
**WO-A1-2004/029131   WO-A1-2013/000915**

**Beschreibung**

Gegenstand der vorliegenden Erfindung ist ein verbessertes Verfahren zur Herstellung von Polyoxyalkylenpolyolen mit berechneten Äquivalentmolmassen von 9550 bis 23000 g/mol, bevorzugt von 9550 bis 20000 g/mol, besonders bevorzugt von 9700 bis 16000 g/mol.

Für die Herstellung von Polyurethanen geeignete Polyoxyalkylenpolyole können über verschiedene Herstellverfahren erhalten werden. Von großtechnischer Bedeutung ist zum Einen die basisch katalysierte Anlagerung von Alkylenoxiden an H-funktionelle Starterverbindungen, zum anderen die Verwendung von Doppelmetallcyanidverbindungen als Katalysatoren ("DMC-Katalysatoren") für die Anlagerung von Alkylenoxiden an H-funktionelle Starterverbindungen. Die durch (Lewis-)Säuren katalysierte Anlagerung von Alkylenoxiden an geeignete Starterverbindungen ist von untergeordneter Bedeutung.

Unter Alkalimetallhydroxidkatalyse nehmen mit steigender Molmasse des Polymerisates unerwünschte Nebenreaktionen deutlich zu. Insbesondere ist hier die Isomerisierung von Propylenoxid zu Allylalkohol zu nennen, die bei hohen Äquivalentmolmassen (bzw. niedrigen OH-Zahlen) zu einem hohen Anteil monofunktioneller Polyoxyalkylenspezies im Reaktionsgemisch und damit zu einer signifikanten Absenkung der Funktionalität führt. Die monofunktionellen Polyoxyalkylenmoleküle wirken sich daher nachteilig auf das Durchhärteverhalten und das physikalische Eigenschaftsprofil von Polyurethansystemen bzw. anderen aus diesen Polyoxyalkylenverbindungen herstellbaren Werkstoffen, wie beispielsweise silanbasierten, unter Luftfeuchtigkeitseinwirkung aushärtbaren Dichtstoffen, aus.

Durch den Einsatz der DMC-Katalysatoren ist es möglich geworden, die Addition von Alkylenoxiden, insbesondere Propylenoxid, an H-funktionelle Starterverbindungen bis zu sehr niedrigen OH-Zahlen, d. h. hohen Äquivalentmolmassen, voranzutreiben, ohne dass die oben erwähnte Isomerisierung von Propylenoxid zu Allylalkohol in nennenswertem Maße eintritt. Hochaktive DMC-Katalysatoren, die z.B. in US-A 5470813, EP-A 700949, EP-A 743093, EP-A 761708, WO-A 97/40086, WO-A 98/16310 und WO-A 00/47649 beschrieben sind, besitzen zudem eine außerordentlich große Aktivität und ermöglichen die Polyoxyalkylenpolyolherstellung bei sehr geringen Katalysatorkonzentrationen (100 ppm oder weniger), so dass eine Abtrennung des Katalysators aus dem fertigen Produkt nicht mehr erforderlich ist. Ein typisches Beispiel sind die in EP-A 700949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert.-Butanol) noch eine Polyoxyalkylenverbindung mit einem zahlenmittleren Molekulargewicht größer als 500 g/mol enthalten.

Unter der Äquivalentmolmasse aktive Wasserstoffatome enthaltender Materialien ist die durch die Zahl der aktiven Wasserstoffatome geteilte Gesamtmasse des aktive Wasserstoffatome enthaltenden Materials zu verstehen. Im Falle von hydroxygruppenhaltigen Materialien (wie beispielsweise Polyoxyalkylenpolyolen) steht sie in folgender Beziehung zur OH-Zahl (HydroxylZahl):

$$\text{Äquivalentmolmasse} = 56100 \, / \, (\text{OH-Zahl [mg KOH/g]}) \qquad (I)$$

Die Ermittlung der Äquivalentmolmasse des Polyoxyalkylenpolyols erfolgt also gemäß Formel (I), wobei die die Hydroxylzahl des Polyoxyalkylenpolyols nach DIN 53240 bestimmt wird. Die berechnete Äquivalentmolmasse wird ermittelt, indem die berechnete OH-Zahl in Formel (I) eingesetzt wird. Die berechnete OH-Zahl (OH-Zahl$_{ber}$) wird nach Formel (II) bestimmt:

$$\text{OH-Zahl}_{ber} = \frac{((\text{Masse des eingesetzten Starters}) \times (\text{OH-Zahl des Starters}))}{(\text{Gesamtmasse Polymerisationsansatz})} \qquad (II)$$

In der vorliegenden Patentschrift wird auf die berechnete Äquivalentmolmasse Bezug genommen, da auch DMC-Katalysatoren Alkylenoxide nicht völlig nebenreaktionsfrei zu Polyoxyalkylenen umsetzen können. Dies macht sich naturgemäß besonders bei den in der vorliegenden Patentschrift behandelten hohen Zieläquivalentmolmassen bemerkbar.

Die DMC-katalysierte Herstellung von Alkylenoxidadditionsprodukten mit hohen Äquivalentmolmassen und deren Verwendung zur Herstellung von polyurethan- bzw. polyharnstoffbasierten Werkstoffen sind dem Fachmann bekannt. Beispielsweise werden in DE-A 4117679 und US-A 5096993 die Verwendung von Polyhydroxy- bzw. Polyaminverbindungen mit Molmassen bis zu 30000 Da zur Herstellung von weichen Polyurethan- bzw. Polyharnstoffelastomeren nach dem Reaktionsspritzgussverfahren ("RIM"-Technologie) offenbart. WO-A 9104997 offenbart Polyoxyalkylentriole mit Molmassen bis zu 30000 Da als Polyoxyalkylenkomponente von isocyanatterminierten Prepolymeren, die in hochwertigen Polyurethandichtstoffsystemen eingesetzt werden. EP-A 1316573 offenbart ein Verfahren zum Erhalt von schnell entformbaren Weichschaumstoffkörpern mit guten Dauergebrauchseigenschaften, bei deren Herstellung als Polyolkomponente über DMC-Katalyse hergestellte Polyoxyalkylenpolyole mit Äquivalentmolmassen von bevorzugt 5000 bis 11000 Da zum Einsatz kommen. In EP-A 0425694 werden isocyanatterminierte Polyoxyalkylenprepolymere offenbart, deren Polyoxyalkylenkomponente Äquivalentmolmassen von bis zu 15000 Da aufweist. Solche Polyoxyalkylenpolyole komponente Äquivalentmolmassen von bis zu 15000 Da aufweist. Solche Polyoxyalkylenpolyole werden über DMC-Katalyse erhalten.

Bei der DMC-katalysierten Herstellung von Polyoxyalkylenpolyolen mit sehr hohen berechneten Äquivalentmolmassen (9500 Da oder höher) stellt sich die Erzielung handhabbarer Viskositäten mit wachsendem berechneten Äquivalentgewicht als problematisch dar. In WO-A 2013/000915 wurde zur Lösung dieses Problems vorgeschlagen, die Alkylenoxide innerhalb von 15 bis 23 h in den Reaktor zu dosieren. Werden die Alkylenoxide innerhalb dieses Dosierzeitfensters dem Reaktor zugeführt, lassen sich in der Tat relativ niedrigviskose Polyoxyalkylenpolyole mit hohen berechneten Äquivalentmolmassen erhalten. Ein deutlicher Nachteil dieses Verfahrens ist jedoch die lange Laufzeit der einzelnen Polymerisationsansätze, die die Anlagenkapazität (Raum-ZeitAusbeute) limitiert.

Die Aufgabe der vorliegenden Erfindung bestand daher darin, ein auf die Erzielung möglichst niedriger Viskositäten, und Ansatzlaufzeiten von $\leq$ 13 h, bevorzugt $\leq$ 12 h, besonders bevorzugt $\leq$ 11 h optimiertes Herstellverfahren für Polyoxyalkylenpolyole mit berechneten Äquivalentmolmassen von 9500 bis 23000 g/mol, bevorzugt von 9500 bis 20000 g/mol, besonders bevorzugt von 9700 bis 16000 g/mol bereitzustellen.

Überraschenderweise konnte die Aufgabe gelöst werden durch ein Verfahren zur Herstellung eines Polyoxyalkylenpolyols durch Umsetzung mindestens einer H-funktionellen Starterverbindung mit mindestens einem Alkylenoxid in Gegenwart eines Doppelmetallcyanid-Katalysators in einem Reaktor, wobei dem Reaktor ab einem Zeitpunkt $t_1$ bis zu einem Zeitpunkt $t_3$ das mindestens eine Alkylenoxid kontinuierlich oder diskontinuierlich zugeführt wird, und wobei eine Teilmenge der insgesamt zur Herstellung des angestrebten Polyoxyalkylenpolyols zuzuführenden Menge des mindestens einen Alkylenoxids bereits ab einem Zeitpunkt to $\leq t_1$ dem Reaktor zugeführt werden kann,

**dadurch gekennzeichnet, dass**
ab einem Zeitpunkt $t_2$ die mittlere Dosierrate $r_{AO}$, mit der das mindestens eine Alkylenoxid dem Reaktor zugeführt wird, stets kleiner oder gleich 42 h$^{-1}$ ist,
wobei gilt $t_3 > t_2 > t_1$, und

$$r_{AO} = \frac{n_{AO}}{n_{OH} \cdot \Delta t} \cdot OHZ_{Ziel} /(mg_{KOH} \cdot g^{-1}),$$

mit

- $\Delta$t: *Zeitraum von $t_2$ bis zum Zeitpunkt der Beendigung der Alkylenoxidzugabe ($t_3$) in h,*
- $n_{AO}$: *im Zeitraum $\Delta t$ insgesamt zugegebene Stoffmenge n an Alkylenoxid in mol,*
- $n_{OH}$: *Gesamt-Stoffmenge n an Hydroxylgruppen der eingesetzten Starterverbindung in mol,*

$$OHZ_{Ziel} = \frac{m_S \cdot OHZ_S}{m_R} ;$$

- $OHZ_S$: *Hydroxylzahl der mindestens einen Starterverbindung in mg KOH/g,*
- $m_S$: *Gesamtmasse der mindestens einen eingesetzten Starterverbindung in g,*
- $m_R$: *Gesamtmasse aller dem Reaktor zugeführten Reaktanden nach Beendigung der Alkylenoxidzugabe in g,*

wobei der Zeitpunkt $t_2$ so gewählt wird, dass das zu diesem Zeitpunkt im Reaktor vorliegende Polyoxyalkylenpolyol eine berechnete Äquivalentmolmasse $M(t_2)^{ber.}_{\ddot{A}quiv.}$ im Bereich von 8 000 g $\cdot$ mol$^{-1}$ bis 9 500 g $\cdot$ mol$^{-1}$ aufweist, wobei ferner gilt, dass das mindestens eine Alkylenoxid ab dem Zeitpunkt $t_1$ und

- mindestens bis zu dem Zeitpunkt, der dem Erreichen einer berechneten Äquivalentmolmasse $M(t)^{ber.}_{\ddot{A}quiv.}$ von 8 000 g $\cdot$ mol$^{-1}$ und

- höchstens bis zu dem Zeitpunkt, der dem Erreichen einer berechneten Äquivalentmolmasse $M(t)^{ber.}_{\ddot{A}quiv.}$ von 9 500 g $\cdot$ mol$^{-1}$ entspricht,

dem Reaktor so zugeführt wird, dass eine Gesamtalkylenoxiddosierzeit, definiert als der Zeitraum $\Delta t_{30} = t_3 - t_0$, von 0,5 h bis 13 h, bevorzugt von 1 h bis 12 h, besonders bevorzugt 1,5 h bis 11 h, erreicht wird,

wobei gilt

$$M(t)_{\ddot{A}quiv.}^{ber.} = \frac{m_R^t}{m_S \cdot OHZ_S} \cdot (56100 mg_{KOH} \cdot mol^{-1}),$$

mit

$m_R^t:$ *Gesamtmasse aller dem Reaktor bis zu einem gegebenen Zeitpunkt t zugeführten Reaktanden in g.*

Hierbei weisen die nach dem erfindungsgemäßen Verfahren erhältlichen Polyoxyalkylenpolyole nach Verstreichen der Gesamtalkylenoxiddosierzeit eine berechnete Äquivalentmolmasse 9 550 g · mol⁻¹ bis 23 000 g · mol⁻¹, besonders bevorzugt von 9 550 g · mol⁻¹ bis 20 000 g · mol⁻¹ und ganz besonders bevorzugt von 9700 bis 16000 g/mol auf. Es hatte sich als außerordentlich überraschend erwiesen, dass vor Erreichen einer berechneten Äquivalentmolmasse $M(t_2)_{\ddot{A}quiv..}^{ber.}$, von wenigstens 8000 g / mol das (die) Alkylenoxid(e) im Prinzip beliebig schnell dosiert werden kann (können), d. h. die Alkylenoxiddosierrate nur der Limitierung der Bereitstellung einer ausreichenden Kühlleistung unterliegt. Zwar wird in WO-A 2013/000915 darauf hingewiesen, dass die Alkylenoxiddosierraten während der Ansatzlaufzeit verändert und bevorzugt gesenkt werden können. Der WO-A 2013/000915 lassen sich jedoch keine Hinweise entnehmen, dass erst ab dem Durchlaufen einer berechneten Äquivalentmolmasse von mindestens 8000 g / mol eine Senkung der Dosierrate zwingend notwendig wird, um hochmolekulare Polyole mit niedrigen Viskositäten zu erhalten, was eine Voraussetzung für die Erreichung kurzer Ansatzlaufzeiten und damit für die Erreichung eines wichtigen Erfindungsziels darstellt.

In einer besonderen Ausführungsform kann in einem der Polymerisation vorgelagerten Verfahrensschritt der DMC-Katalysator zunächst separat aktiviert werden durch Zuführung einer Teilmenge der insgesamt zur Herstellung des angestrebten Polyoxyalkylenpolyols zuzuführenden Menge des mindestens einen Alkylenoxids bereits ab einem Zeitpunkt to bis zu einem Zeitpunkt kleiner oder gleich $t_1$. Für die separate Aktivierung des DMC-Katalysators werden normalerweise bis zu 20 Massen-% Alkylenoxid, bevorzugt 2 bis zu 20 Massen-% Alkylenoxid, bezogen auf die Menge der mindestens einen eingesetzten H-funktionellen Starterverbindung, eingesetzt. Die Zugabe des mindestens einen Alkylenoxids kann vor, während oder nach dem Aufheizen des Reaktorinhaltes auf Reaktionstemperatur geschehen; sie erfolgt bevorzugt nach Erreichen der Reaktionstemperatur. In dieser Ausführungsform beginnt die Dosierung der für die Aktivierung des DMC-Katalysators notwendigen Alkylenoxidmenge zum Zeitpunkt $t_0$. Nach Unterbrechung der Alkylenoxiddosierung, nachdem typischerweise 2 bis 20 Massen-% Alkylenoxid, bezogen auf die Masse der mindestens einen eingesetzten H-funktionellen Starterverbindung dosiert worden sind, macht sich die Aktivierung des Doppelmetallcyanid-Katalysators durch einen beschleunigten Abfall des Reaktordruckes bemerkbar, wodurch der beginnende Alkylenoxidumsatz angezeigt wird. Dem Reaktionsgemisch wird sodann, d. h. nach erfolgter Aktivierung, die verbleibende Menge Alkylenoxid bzw. Alkylenoxidgemisch zugeführt.

H-funktionelle Starterverbindungen sind solche Verbindungen, die mindestens ein Zerewitinoffaktives Wasserstoffatom, manchmal auch nur als "aktiver Wasserstoff" bezeichnet, enthalten. Ein an C, N, O, oder S gebundener Wasserstoff wird als Zerewitinoff-aktiver Wasserstoff bezeichnet, wenn er nach einem von Zerewitinoff aufgefundenen Verfahren durch Umsetzung mit Methylmagnesiumjodid Methan liefert. Typische Beispiele für Verbindungen mit Zerewitinoffaktivem Wasserstoff sind Verbindungen, die Carboxyl-, Hydroxyl- oder Thiol-Gruppen als funktionelle Gruppen enthalten. Unter der Funktionalität wird die Anzahl an Zerewitinoff-aktiven Wasserstoffatomen pro Molekül der H-funktionellen Starterverbindungen verstanden. Dabei weist die mindestens eine H-funktionelle Starterverbindung meist Funktionalitäten von 1 bis 35, bevorzugt von 2 bis 8, besonders bevorzugt 2 bis 3, ganz besonders bevorzugt von 2 auf. Die Molmassen geeigneter H-funktioneller Starterverbindungen betragen im Allgemeinen von 18 g/mol bis 1200 g/mol. Wird eine Mischung an H-funktionellen Starterverbindungen eingesetzt, ist die Funktionalität dieser Mischung die zahlengemittelte durchschnittliche Funktionalität der H-funktionellen Starterverbindungen. Typische Beispiele für geeignete Starterverbindungen sind Methanol, Ethanol, 1-Propanol, 2-Propanol und höhere aliphatische Monole, insbesondere Fettalkohole, Phenol, alkylsubstituierte Phenole, Propylenglykol, Ethylenglykol, Diethylenglykol, Dipropylenglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Pentaerythrit, Sorbit, Saccharose, Hydrochinon, Brenzcatechin, Resorcin, Bisphenol F, Bisphenol A, 1,3,5-Trihydroxybenzol, sowie methylolgruppenhaltige Kondensate aus Formaldehyd und Phenol oder Harnstoff. Es können auch hochfunktionelle Starterverbindungen auf Basis von hydrierten Stärkehydrolyseprodukten eingesetzt werden. Solche sind beispielsweise in EP-A 1525244 beschrieben. Außerdem können als Starterverbindungen auch Ringöffnungsprodukte aus cyclischen Carbonsäureanhydriden und Polyolen eingesetzt werden. Beispiele sind Ringöffnungsprodukte aus Phthalsäureanhydrid, Bernsteinsäureanhydrid, Maleinsäureanhydrid einerseits und Ethylenglykol, Diethylenglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Pentaerythrit oder Sorbit andererseits. Daneben ist es auch möglich, ein- oder mehrfunktionelle Carbonsäuren direkt als Starterverbindungen einzusetzen.

Im erfindungsgemäßen Verfahren können auch vorgefertigte Alkylenoxidadditionsprodukte der erwähnten H-funktionellen Starterverbindungen, also Polyoxyalkylenpolyole vorzugsweise mit OH-Zahlen von 16 bis 1000 mg KOH/g, besonders bevorzugt 40 bis 1000 mg KOH/g, als ausschließliche Starter für das erfindungsgemäße Verfahren eingesetzt werden oder den oben erwähnten Startern zugesetzt werden. Diese als (Co-)Starter einsetzbaren Alkylenoxidadditionsprodukte können ihrerseits über DMC- oder Basenkatalyse hergestellt werden. Auch ist es möglich, im erfindungsgemäßen Prozess Polyesterpolyole vorzugsweise mit OH-Zahlen im Bereich von 20 bis 800 mg KOH/g als (Co-)Starter mit dem Ziel der Polyoxyalkylenesterherstellung einzusetzen. Hierfür geeignete Polyesterpolyole können beispielsweise aus organische Dicarbonsäuren mit 2 bis 12 Kohlenstoffatomen und mehrwertigen Alkoholen, vorzugsweise Diolen, mit 2 bis 12 Kohlenstoffatomen, vorzugsweise 2 bis 6 Kohlenstoffatomen nach bekannten Verfahren hergestellt werden.

Des Weiteren können als H-funktionelle Startersubstanzen Polycarbonatpolyole, Polyestercarbonatpolyole oder Polyoxyalkylencarbonatpolyole, bevorzugt Polycarbonatdiole, Polyestercarbonatdiole oder Polyoxyalkylencarbonatdiole vorzugsweise jeweils mit OH-Zahlen im Bereich von 20 bis 800 mg KOH/g, als (Co-)Starter verwendet werden. Diese werden beispielsweise durch Umsetzung von Phosgen, Dimethylcarbonat, Diethylcarbonat oder Diphenylcarbonat mit di- oder höherfunktionellen Alkoholen oder Polyesterpolyolen oder Polyoxyalkylenpolyolen hergestellt.

Im erfindungsgemäßen Verfahren dienen bevorzugt H-funktionelle Starterverbindungen mit Hydroxygruppen wie beispielsweise Methanol, Ethanol, 1-Propanol, 2-Propanol und höhere aliphatische Monole, insbesondere Fettalkohole, Phenol, alkylsubstituierte Phenole, Propylenglykol, Ethylenglykol, Diethylenglykol, Dipropylenglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Pentaerythrit, Sorbit, Saccharose, Hydrochinon, Brenzcatechin, Resorcin, Bisphenol F, Bisphenol A, 1,3,5-Trihydroxybenzol, methylolgruppenhaltige Kondensate aus Formaldehyd und Phenol und hydrierte Stärkehydrolyseprodukte sowie vorgefertigte Alkylenoxidadditionsprodukte dieser Starterverbindungen als Träger der aktiven Wasserstoffe. Es können auch Gemische verschiedener H-funktioneller Starterverbindungen eingesetzt werden. Die Funktionalität der mindestens einen H-funktionellen Starterverbindung beträgt besonders bevorzugt 2 bis 3, insbesondere beträgt die Funktionalität der mindestens einen H-funktionellen Starterverbindung bevorzugt 2.

Für das erfindungsgemäße Verfahren geeignete DMC-Katalysatoren sind im Prinzip aus dem Stand der Technik bekannt (siehe z.B. US-A 3 404 109, US-A 3829505, US-A 3941849 und US-A 5158922). DMC-Katalysatoren, die z.B. in US-A 5470813, EP-A 700949, EP-A 743093, EP-A 761708, WO 97/40086, WO 98/16310 und WO 00/47649 beschrieben sind, besitzen eine sehr hohe Aktivität in der Polymerisation von Alkylenoxiden und ermöglichen die Herstellung von Polyoxyalkylenpolyolen unter optimalen Bedingungen bei sehr geringen Katalysatorkonzentrationen (100 ppm oder weniger), so dass eine Abtrennung des Katalysators aus dem fertigen Produkt im Allgemeinen nicht mehr erforderlich ist. Ein typisches Beispiel sind die in EP-A 700949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert.-Butanol) noch eine Polyoxyalkylenverbindung mit einem zahlenmittleren Molekulargewicht größer als 500 g/mol enthalten. Es ist auch möglich, die in EP 2 571922 A1 offenbarten alkalischen DMC-Katalysatoren einzusetzen.

Zur Herstellung der Doppelmetallcyanid-Verbindungen geeignete cyanidfreie Metallsalze besitzen bevorzugt die allgemeine Formel (II),

$$M(X)_n \qquad (II)$$

wobei

$$M(X)_n \qquad (II)$$

wobei

M ausgewählt ist aus den Metallkationen $Zn^{2+}$, $Fe^{2+}$, $Ni^{2+}$, $Mn^{2+}$, $Co^{2+}$, $Sr^{2+}$, $Sn^{2+}$, $Pb^{2+}$ und, $Cu^{2+}$, bevorzugt ist M $Zn^{2+}$, $Fe^{2+}$, $Co^{2+}$ oder $Ni^{2+}$,

X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;

n ist 1, wenn X = Sulfat, Carbonat oder Oxalat ist und

n ist 2, wenn X = Halogenid, Hydroxid, Cyanat, Thiocyanat, Isocyanat, Isothiocyanat oder Nitrat ist,

oder geeignete cyanidfreie Metallsalze besitzen die allgemeine Formel (III),

$$M_r(X)_3 \qquad (III)$$

wobei

M ausgewählt ist aus den Metallkationen $Fe^{3+}$, $Al^{3+}$ und $Cr^{3+}$,

X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;

r ist 2, wenn X = Sulfat, Carbonat oder Oxalate ist und

r ist 1, wenn X = Halogenid, Hydroxid, Cyanat, Thiocyanat, Isocyanat, Isothiocyanat, Carboxylat oder Nitrat ist,

oder geeignete cyanidfreie Metallsalze besitzen die allgemeine Formel (IV),

$$M(X)_s \qquad (IV)$$

wobei

M ausgewählt ist aus den Metallkationen $Mo^{4+}$, $V^{4+}$ und $W^{4+}$

X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;

s ist 2, wenn X = Sulfat, Carbonat oder Oxalat ist und

s ist 4, wenn X = Halogenid, Hydroxid, Cyanat, Thiocyanat, Isocyanat, Isothiocyanat, Carboxylat oder Nitrat ist,

oder geeignete cyanidfreie Metallsalze besitzen die allgemeine Formel (V),

$$M(X)_t \qquad (V)$$

wobei

M ausgewählt ist aus den Metallkationen $Mo^{6+}$ und $W^{6+}$

X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;

t ist 3, wenn X = Sulfat, Carbonat oder Oxalat ist und

t ist 6, wenn X = Halogenid, Hydroxid, Cyanat, Thiocyanat, Isocyanat, Isothiocyanat, Carboxylat oder Nitrat ist,

Beispiele geeigneter cyanidfreier Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen-(II)chlorid, Cobalt(II)chlorid, Cobalt(II)thiocyanat, Nickel(II)chlorid und Nickel(II)nitrat. Es können auch Mischungen verschiedener Metallsalze eingesetzt werden.

Zur Herstellung der Doppelmetallcyanid-Verbindungen geeignete Metallcyanidsalze besitzen bevorzugt die allgemeine Formel (VI)

$$(Y)_a M'(CN)_b (A)_c \qquad (VI)$$

wobei

M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II),

Y ausgewählt ist aus einem oder mehreren Metallkationen der Gruppe bestehend aus Alkalimetall (d.h. $Li^+$, $Na^+$, $K^+$, $Rb^+$, $Cs^+$) und Erdalkalimetall (d.h. $Be^{2+}$, $Ca^{2+}$, $Mg^{2+}$, $Sr^{2+}$, $Ba^{2+}$),

A ausgewählt ist aus einem oder mehreren Anionen der Gruppe bestehend aus Halogeniden (d..h. Fluorid, Chlorid, Bromid, Iodid), Hydroxid, Sulfat, Carbonat, Cyanat, Thiocyanat, Isocyanat, Isothiocyanat, Carboxylat, Oxalat oder Nitrat und

a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

Beispiele geeigneter Metallcyanidsalze sind Kaliumhexacyanocobaltat(III), Kaliumhexacyano-ferrat(II), Kaliumhexacyano-ferrat(III), Calciumhexacyanocobaltat(III) und Lithiumhexacyano-cobaltat(III).

Bevorzugte Doppelmetallcyanid-Verbindungen, die in den erfindungsgemäßen DMC-Katalysatoren enthalten sind, sind Verbindungen der allgemeinen Formel (VII)

$$M_x[M'_{x'}(CN)_y]_z \qquad (VII),$$

worin M wie in Formel (II) bis (V) und

M' wie in Formel (VI) definiert ist, und

x, x', y und z sind ganzzahlig und so gewählt, dass die Elektronenneutralität der Doppelmetallcyanidverbindung gegeben ist.

Vorzugsweise ist

x = 3, x' = 1, y = 6 und z = 2,

M = Zn(II), Fe(II), Co(II) oder Ni(II) und

M' = Co(III), Fe(III), Cr(III) oder Ir(III).

Beispiele geeigneter Doppelmetallcyanidverbindungen sind Zinkhexacyanocobaltat(III), Zink-hexacyanoiridat(III), Zinkhexacyanoferrat(III) und Cobalt(II)hexacyanocobaltat(III). Weitere Beispiele geeigneter Doppelmetallcyanid-Verbindungen sind z.B. US-A 5158922 (Spalte 8, Zeilen 29 - 66) zu entnehmen. Besonders bevorzugt verwendet wird Zinkhexacyanocobaltat(III).

Die bei der Herstellung der DMC-Katalysatoren zugesetzten organischen Komplexliganden sind beispielsweise in US-A 5158922 (siehe insbesondere Spalte 6, Zeilen 9 bis 65), US-A 3404109, US-A 3829505, US-A 3941849, EP-A 700949, EP-A 761708, JP-A 4145123, US-A 5470813, EP-A 743 093 und WO-A 97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, tert-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-tert.-butylether, Diethylenglykol-mono-tert.-butylether, Tripropylenglykol-mono-methylether und 3-Methyl-3-oxetan-methanol). Höchst bevorzugte organische Komplexliganden sind ausgewählt aus einer oder mehrerer Verbindungen der Gruppe bestehend aus Dimethoxyethan, tert-Butanol, 2-Methyl-3-buten-2-ol, 2-Methyl-3-butin-2-ol, Ethylenglykol-mono-tert.-butylether und 3-Methyl-3-oxetan-methanol.

Optional werden bei der Herstellung der erfindungsgemäßen DMC-Katalysatoren eine oder mehrere komplexbildende Komponente(n) aus den Verbindungsklassen der Polyoxyalkylenverbindungen, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, α,β-ungesättigten Carbonsäureester oder ionische oberflächen- bzw. grenzflächenaktiven Verbindungen eingesetzt.

Bevorzugt werden bei der Herstellung der erfindungsgemäßen DMC-Katalysatoren im ersten Schritt die wässrigen Lösungen des Metallsalzes (z.B. Zinkchlorid), eingesetzt im stöchiometrischen Überschuss (mindestens 50 Mol-%) bezogen auf Metallcyanidsalz, (also mindestens ein molares Verhältnis von cyanidfreiem Metallsalz zu Metallcyanidsalz von 2,25 zu 1,00) und des Metallcyanidsalzes (z.B. Kaliumhexacyanocobaltat) in Gegenwart des organischen Komplexliganden (z.B. tert.-Butanol) umgesetzt, so dass sich eine Suspension bildet, die die Doppelmetallcyanid-Verbindung (z.B. Zinkhexacyanocobaltat), Wasser, überschüssiges cyanidfreies Metallsalz, und den organischen Komplexliganden enthält. Der organische Komplexligand kann dabei in der wässrigen Lösung des cyanidfreien Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des cyanidfreien Metallsalzes und des Metallcyanidsalzes und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators wie in WO-A 01/39883 beschrieben.

Im zweiten Schritt erfolgt die Isolierung des Feststoffs (d.h. die Vorstufe des erfindungsgemäßen Katalysators) aus der Suspension durch bekannte Techniken, wie Zentrifugation oder Filtration.

In einer bevorzugten Ausführungsvariante zur Herstellung des Katalysators wird der isolierte Feststoff anschließend in einem dritten Verfahrensschritt mit einer wässrigen Lösung des organischen Komplexliganden gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem erfindungsgemäßen Katalysator entfernt werden. Bevorzugt liegt die Menge des organischen Komplexliganden in der wässrigen Waschlösung zwischen 40 und 80 Massen-%, bezogen auf die Gesamtlösung.

Optional wird im dritten Schritt der wässrigen Waschlösung eine oder mehrere weitere komplexbildende Komponente(n), bevorzugt im Bereich zwischen 0,5 und 5 Massen-%, bezogen auf die Gesamtlösung, zugefügt.

Außerdem ist es vorteilhaft, den isolierten Feststoff mehr als einmal zu waschen. Hierzu kann z.B. der erste Waschvorgang wiederholt werden. Bevorzugt ist es aber, für weitere Waschvorgänge nicht wässrige Lösungen zu verwenden, z.B. eine Mischung aus organischem Komplexliganden und weiterer komplexbildender Komponente.

Der isolierte und gegebenenfalls gewaschene Feststoff wird anschließend, gegebenenfalls nach Pulverisierung, bei Temperaturen von im allgemeinen 20 - 100 °C und bei absoluten Drücken von im allgemeinen 0,1 mbar bis Normaldruck (1013 mbar) getrocknet. Ein bevorzugtes Verfahren zur Isolierung der erfindungsgemäßen DMC-Katalysatoren aus der Suspension durch Filtration, Filterkuchenwäsche und Trocknung wird in WO-A 01/80994 beschrieben.

Im erfindungsgemäßen Verfahren wird der Doppelmetallcyanid-Katalysator in Massenanteilen von 10 ppm bis 1000 ppm bevorzugt in Massenanteilen von 15 bis 500 ppm, besonders bevorzugt in Massenanteilen von 20 bis 300 ppm und ganz besonders bevorzugt in Massenanteilen von 25 bis 150 ppm, jeweils bezogen auf die Gesamtmasse der Reaktionsmischung im Reaktor zum Zeitpunkt $t_3$, verwendet.

Vorzugsweise verbleibt der DMC-Katalysator im Endprodukt, er kann jedoch auch abgetrennt werden, beispielsweise durch Behandlung mit Adsorbentien. Verfahren zur Abtrennung von DMC-Katalysatoren sind beispielsweise beschrieben in US-A 4987271, DE-A 3132258, EP-A 406440, US-A 5391722, US-A 5099075, US-A 4721818, US-A 4877906 und EP-A 385619.

Für das erfindungsgemäße Verfahren weist das mindestens eine Alkylenoxid 2 bis 24 Kohlenstoffatome auf. Bei den Alkylenoxiden mit 2 bis 24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, $C_1$-$C_{24}$-Ester von epoxidierten Fettsäuren, Epichlorhydrin, Glycidol, und Derivate des Glycidols wie beispielsweise Methylglycidylether, Ethylglycidylether, 2-Ethylhexylglycidylether, Allylglycidylether, Glycidylmethacrylat sowie epoxidfunktionelle Alkyloxysilane wie beispielsweise 3-Glycidyloxypropyltrimethoxysilan, 3-Glycidyloxypropyltriethoxysilan, 3-Glycidyloxypropyltripropoxysilan, 3-Glycidyloxypropyl-methyl-dimethoxysilan, 3-Glycidyloxypropyl-ethyldiethoxysilan, 3-Glycidyloxypropyltriisopropoxysilan.

Im erfindungsgemäßen Verfahren werden als Alkylenoxid bevorzugt Ethylenoxid, Propylenoxid oder ein Gemisch aus Ethylenoxid und Propylenoxid eingesetzt. Werden Gemische aus Ethylenoxid und Propylenoxid eingesetzt, weisen diese bevorzugt bis zu 75 Massen-% Ethylenoxid, besonders bevorzugt bis zu 50 Massen-% Ethylenoxid und ganz besonders bevorzugt bis zu 30 Massen-% Ethylenoxid bezogen auf die Gesamtmasse des Gemisches aus Ethylenoxid und Propylenoxid auf. Besonders bevorzugt wird ausschließlich Propylenoxid eingesetzt. Die Alkylenoxide können dem Reaktor als Einzelkomponenten oder als Gemisch zugeführt werden. Es ist ebenfalls möglich mehrere Alkylenoxide dem Reaktor nacheinander zuzuführen, womit sich Polyoxyalkylenketten mit Blockstruktur realisieren lassen. Bei der Dosierung mehrerer Alkylenoxide ist es möglich die Zusammensetzung des zugeführten Alkylenoxidstroms kontinuierlich oder instantan zu ändern.

Weitere nach dem erfindungsgemäßen Verfahren mit Alkylenoxiden unter DMC-Katalyse copolymerisierbare Monomere sind beispielsweise aliphatische Lactone, aromatische Lactone, Lactide, cyclische Carbonate mit bevorzugt mindestens drei gegebenenfalls substituierten Methylengruppen zwischen den Sauerstoffatomen der Carbonatgruppe, aliphatische cyclische Anhydride und aromatische cyclische Anhydride und Kohlendioxid.

Aliphatische oder aromatische Lactone sind cyclische Verbindungen enthaltend eine Esterbindung im Ring. Bevorzugte Verbindungen sind 4-gliedrige Ringlactone wie ß-Propiolacton, ß-Butyrolacton, ß-Isovalerolacton, ß-Caprolacton, ß-Isocaprolacton, ß-Methyl-ß-valerolacton, 5-gliedrige Ringlactone, wie γ-Butyrolacton, γ-Valerolacton, 5-Methylfuran-2(3H)-on, 5-Methylidenedihydrofuran-2(3H)-on, 5-Hydroxyfuran-2(5H)-on, 2-Benzofuran-1(3H)-on und 6-Methy-2-benzofuran-1(3H)-on, 6-gliedrige Ringlactone, wie δ-Valerolacton, 1,4-Dioxan-2-on, Dihydrocumarin, 1H-Isochromen-1-on, 8H-pyrano[3,4-b]pyridine-8-on, 1,4-Dihydro-3H-isochromen-3-on, 7,8-Dihydro-5H-pyrano[4,3-b]pyridine-5-on, 4-Methyl-3,4-dihydro-1H-pyrano[3,4-b]pyridine-1-on, 6-Hydroxy-3,4-dihydro-1H-isochromen-1-on, 7-Hydroxy-3,4-dihydro-2H-chromen-2-on, 3-Ethyl-1H-isochromen-1 -on, 3-(Hydroxymethyl)-1H-isochromen-1-on, 9-Hydroxy-1H,3H-benzo[de]isochromen-1-on, 6,7-Dimethoxy-1,4-dihydro-3H-isochromen-3-on und 3-Phenyl-3,4-dihydro-1H-isochromen-1-on, 7-gliedrige Ringlactone, wie ε-Caprolacton, 1,5-Dioxepan-2-on, 5-Methyloxepan-2-on, Oxepane-2,7-dion, thiepan-2-on, 5-Chlorooxepan-2-on, (4S)-4-(Propan-2-yl)oxepan-2-on, 7-Butyloxepan-2-on, 5-(4-Aminobuthyl)oxepan-2-on, 5-Phenyloxepan-2-on, 7-Hexyloxepan-2-on, (5S,7S)-5-Methyl-7-(propan-2-yl)oxepan-2-on, 4-Methyl-7-(propan-2-yl)oxepan-2-on, und höhergliedrige Ringlactone, wie (7E)-Oxacycloheptadec-7-en-2-on.

Lactide sind cyclische Verbindungen enthaltend zwei oder mehr Esterbindungen im Ring. Bevorzugte Verbindungen sind Glycolid (1,4-Dioxan-2,5-dion), L-Lactid (L-3,6-Dimethyl-1,4-dioxan-2,5-dion), D-Lactid, DL-Lactid, Mesolactid und 3-Methyl-1,4-dioxan-2,5-dion, 3-Hexyl-6-methyl-1,4-dioxan-2,5-dion, 3,6-Di(but-3-en-1-yl)-1,4-dioxan-2,5-dion (jeweils einschließlich optisch aktiver Formen). Besonders bevorzugt ist L-Lactid.

Als cyclische Carbonate werden vorzugsweise Verbindungen mit mindestens drei gegebenenfalls substituierten Methylengruppen zwischen den Sauerstoffatomen der Carbonatgruppe eingesetzt. Bevorzugte Verbindungen sind Trimethylencarbonat, Neopentylglykolcarbonat (5,5-Dimethyl-1,3-dioxan-2-on), 2,2,4-Trimethyl-1,3-pentandiolcarbonat, 2,2-Dimethyl-1,3-butandiolcarbonat, 1,3-Butandiol¬carbonat, 2-Methyl-1,3-propandiolcarbonat, 2,4-Pentandiolcarbonat, 2-Methylbutan-1,3-diolcarbonat, TMP-Monoallylethercarbonat, Pentaerythritdiallylethercarbonat, 5-(2-Hydroxyethyl)-1,3-dioxan-2-on, 5-[2-(Benzyloxy)ethyl]-1,3-dioxan-2-on, 4-Ethyl-l,3-dioxolan-2-on, 1,3-Dioxolan-2-on, 5-Ethyl-5-methyl-1,3-dioxan-2-on, 5,5-Diethyl-1,3-dioxan-2-on, 5-Methyl-5-propyl-1,3-dioxan-2-on, 5-(Phenylamino)-1,3-dioxan-2-on und 5,5-Dipropyl-1,3-dioxan-2-on. Besonders bevorzugt sind Trimethylencarbonat und Neopentylglykolcarbonat.

Cyclische Carbonate mit weniger als drei gegebenenfalls substituierten Methylengruppen zwischen den Sauerstoffatomen der Carbonatgruppe werden unter den Bedingungen des erfindungsgemäßen Verfahrens nicht oder nur zu einem geringen Anteil in die Polymerkette eingebaut.

Cyclische Anhydride sind cyclische Verbindungen enthaltend eine Anhydridgruppe im Ring. Bevorzugte Verbindungen sind Succinsäureanhydrid, Maleinsäureanhydrid, Phthalsäureanhydrid, 1,2-Cyclohexandicarbonsäureanhydrid, Diphensäureanhydrid, Tetrahydrophthalsäureanhydrid, Methyltetrahydrophthalsäureanhydrid, Norbornendisäureanhydrid und ihre Chlorierungsprodukte, Bernsteinsäureanhydrid, Glutarsäureanhydrid, Diglykolsäureanhydrid, 1,8-Naphthalsäureanhydrid, Bernsteinsäureanhydrid, Dodecenylbernsteinsäureanhydrid, Tetradecenylbernsteinsäureanhydrid, Hexadecenylbernsteinsäureanhydrid, Octadecenylbernsteinsäureanhydrid, 3- und 4-Nitrophthalsäureanhydrid, Tetrachlorphthalsäureanhydrid, Tetrabromphthalsäureanhydrid, Itaconsäureanhydrid, Dimethylmaleinsäureanhydrid, Allylnorbornendisäureanhydrid, 3-Methylfuran-2,5-dion, 3-Methyldihydrofuran-2,5-dion, Dihydro-2H-pyran-2,6(3H)-dion, 1,4-Dioxane-2,6-dion, 2H-Pyran-2,4,6(3H,5H)-trion, 3-Ethyldihydrofuran-2,5-dion, 3-Methoxydihydrofuran-2,5-dion, 3-(Prop-2-en-1-yl)dihydrofuran-2,5-dion, N-(2,5-Dioxotetra-hydrofuran-3-yl)formamid und 3[(2E)-But-2-en-1-yl]dihydrofuran-2,5-dion. Besonders bevorzugt sind Succinsäureanhydrid, Maleinsäureanhydrid und Phthalsäureanhydrid.

Ihre Verwendung wird weiterhin beschrieben in US-A 3538043, US-A 4500704, US-A 5032671, US-A 6646100, EP-A 222453 und WO-A 2008/013731.

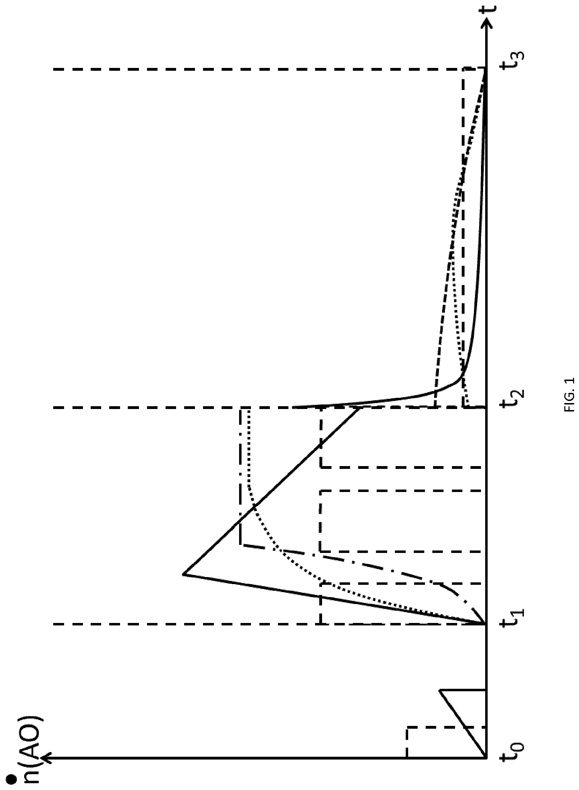

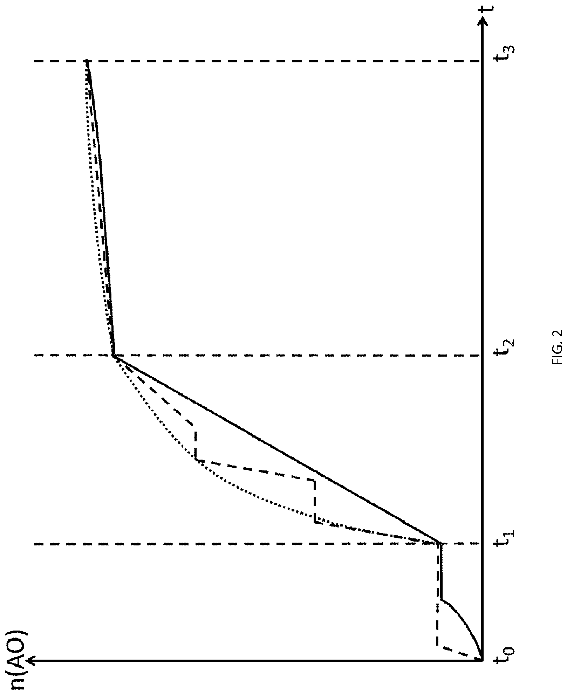

In einer Ausführungsform des erfindungsgemäßen Verfahrens kann die Dosierrate der Alkylenoxide oder von Mischungen aus Alkylenoxiden während der jeweiligen Dosierphasen der Gesamtalkylenoxiddosierung von < 13 h bevorzugt ≤ 12 h, besonders bevorzugt ≤ 11 h Dauer linear als Funktion der dosierten Alkylenoxidmasse geändert werden, diese Änderung kann aber auch nichtlinear erfolgen. Ebenfalls ist es möglich die Alkylenoxiddosierung als Funktion der Dosierzeit zu steuern. Während oder zwischen den Dosierphasen mit sich ändernder Dosierrate sind auch zeitlich begrenzte Intervalle mit konstanter Dosierrate der Alkylenoxide oder kurzzeitige Dosierunterbrechungen möglich. Weiterhin können die vorgenannten Ausführungen für die Dosierraten auch miteinander kombiniert werden, was in den Abbildungen FIG. 1 und FIG 2 graphisch veranschaulicht werden soll. In den Abbildungen sind Möglichkeiten für Alkylenoxiddosierratenprofile ṅ(AO) (FIG. 1) sowie kumulierte, dosierte Alkylenoxidmengen n(AO) (FIG 2) jeweils als Funktion der Dosierzeit zusammengestellt. Hierbei erhebt die in den Abbildungen gezeigte Auswahl an Dosierprofilen keinen Anspruch auf Vollständigkeit und die Dosierprofile sind nicht maßstäblich. Die Abbildungen dienen lediglich zur Veranschaulichung des erfindungsgemäßen Verfahrens. Sie sind keinesfalls als die Erfindung einschränkende Grenzfälle aufzufassen. Insbesondere können innerhalb der Zeiträume $t_0$ - $t_1$, $t_1$ - $t_2$ und $t_2$ - $t_3$ Kombinationen der gezeigten Dosierprofile zur Anwendung kommen, ebenfalls können natürlich auch Dosierprofile der einzelnen Zeiträume untereinander kombiniert werden, d. h. beispielsweise ein gestrichelt wiedergegebenes Dosierprofil aus dem Zeitraum $t_1$ - $t_2$ mit einem gepunktet wiedergegebenen Dosierprofil aus dem Zeitraum $t_2$ - $t_3$. Es hat sich als vorteilhaft herausgestellt, die Übergänge zwischen den einzelnen Dosierzeiträumen so zu gestalten, dass das Epoxiddosierprofil nicht diskontinuierlich geändert wird.

Den Endprodukten können gegebenenfalls Alterungsschutzmittel wie z. B. Antioxidantien zugesetzt werden.

In einer Ausführungsform wird die mindestens eine H-funktionelle Starterverbindung mit DMC-Katalysator versetzt und in einen Reaktor gegeben, bzw. es werden die H-funktionelle Starterverbindung und der DMC-Katalysator in einen Reaktor gegeben. Der H-funktionellen Starterverbindung können vor der Zugabe des DMC-Katalysators außerdem zusätzlich geringe Mengen (1 bis 500 ppm) organischer oder anorganischer Säuren zugesetzt werden, wie beispielsweise in WO-A 99/14258 beschrieben.

In einer bevorzugten Verfahrensweise wird der Reaktorinhalt zunächst bei Temperaturen von 60 bis 160 °C, bevorzugt 100 bis 155 °C, ganz besonders bevorzugt 110 bis 155 °C mit Inertgas (Stickstoff oder ein Edelgas wie beispielsweise Argon) über einen Zeitraum von bevorzugt 10 bis 60 min unter Rühren gestrippt. Beim Strippen werden flüchtige Bestandteile unter Einleiten von Inertgasen in die Flüssigphase bei gleichzeitig angelegtem Vakuum, bei einem absoluten Druck von 5 bis 500 mbar, entfernt. Die Temperatur kann anschließend auf die Reaktionstemperatur des nachfolgenden Schritts eingestellt werden, sofern diese nicht identisch mit der Stripptemperatur ist. Die endgültige Reaktionstemperatur kann aber auch erst in der Anfangsphase der Alkylenoxiddosierung, beispielsweise unter Nutzung der freiwerdenden Reaktionswärme, eingestellt werden. Die Reaktion mit dem mindestens einen Alkylenoxid ab dem Zeitpunkt $t_1$ wird bei einer Temperatur von bevorzugt 110 °C bis 150 °C, besonders bevorzugt bei 120 - 150 °C durchgeführt.

Gegenstand der Erfindung ist somit auch ein Verfahren zur Herstellung eines Polyoxyalkylenpolyols mit einer berechneten Äquivalentmolmasse von 9 500 g · mol$^{-1}$ bis 23 000 g · mol$^{-1}$, bevorzugt von 9 550 g · mol$^{-1}$ bis 23 000 g · mol$^{-1}$, besonders bevorzugt von 9 550 g · mol$^{-1}$ bis 20 000 g · mol$^{-1}$ und ganz besonders bevorzugt von 9700 bis 16000 g/mol, wobei

($\alpha$) in dem Reaktor der Doppelmetallcyanid-Katalysator und die mindestens eine H-funktionelle Starterverbindung vorgelegt werden und bei einer Temperatur von 60 °C bis 160 °C ein Inertgas in das Gemisch aus Doppelmetallcyanid-Katalysator und der mindestens einen H-funktionellen Starterverbindung eingeleitet wird, und gleichzeitig durch Entfernen des Inertgases ein reduzierter Druck von 5 mbar bis 500 mbar (absolut) eingestellt wird ("Strippen"),
($\beta$) anschließend zu dem Gemisch aus Schritt ($\alpha$) das mindestens eine Alkylenoxid dem Reaktor zugeführt wird ("Polymerisation"), wobei der Beginn der Alkylenoxidzuführung in ($\beta$) den Zeitpunkt $t_1$ markiert.

In einem der Polymerisation (siehe oben Schritt $\beta$) vorgelagerten Verfahrensschritt kann der DMC-Katalysator durch Zugabe von typischerweise 2 bis 20 Massen-% Alkylenoxid, bezogen auf die Menge der in Schritt ($\alpha$) eingesetzten mindestens einen H-funktionellen Starterverbindung, zunächst separat aktiviert werden. Die Zugabe des mindestens einen Alkylenoxids kann vor, während oder nach dem Aufheizen des Reaktorinhaltes auf die Stripp- bzw. Reaktionstemperatur geschehen; sie erfolgt bevorzugt nach dem Strippen. In dieser Ausführungsform beginnt die Dosierung der für die Aktivierung des DMC-Katalysators notwendige Alkylenoxidmenge zum Zeitpunkt $t_0$. Nach Unterbrechung der Alkylenoxiddosierung, nachdem typischerweise 2 bis 20 Massen-% des mindestens einen Alkylenoxids, bezogen auf die in Schritt ($\alpha$1) eingesetzten mindestens einen H-funktionellen Starterverbindung zugegeben worden sind (Schritt ($\alpha$2)), macht sich die Aktivierung des DMC-Katalysators durch einen beschleunigten Abfall des Reaktordruckes bemerkbar, wodurch der beginnende Alkylenoxidumsatz angezeigt wird. Dem Reaktionsgemisch wird sodann, d. h. nach erfolgter Aktivierung, die verbliebene Teilmenge der insgesamt zur Herstellung des angestrebten Polyoxyalkylenpolyols zuzuführenden Menge des mindestens einen Alkylenoxids zugeführt, wobei die Reaktion mit dem mindestens einen Alkylenoxid ab dem Zeitpunkt $t_1$ bevorzugt bei einer Temperatur von 110 °C bis 150 °C, besonders bevorzugt bei 120 - 150 °C durchgeführt wird.

Gegenstand der Erfindung ist somit auch ein Verfahren zur Herstellung eines Polyoxyalkylenpolyols mit einer berechneten Äquivalentmolmasse von 9 500 g · mol$^{-1}$ bis 23 000 g · mol$^{-1}$, bevorzugt von 9 550 g · mol$^{-1}$ bis 23 000 g · mol$^{-1}$, besonders bevorzugt von 9 550 g · mol$^{-1}$ bis 20 000 g · mol$^{-1}$ und ganz besonders bevorzugt von 9700 bis 16000 g/mol, wobei

($\alpha$)

($\alpha$1) in dem Reaktor der Doppelmetallcyanid-Katalysator und die mindestens eine H-funktionelle Starterverbindung vorgelegt werden und bei einer Temperatur von 60 °C bis 160 °C ein Inertgas in das Gemisch aus Doppelmetallcyanid-Katalysator und der mindestens einen H-funktionellen Starterverbindung eingeleitet wird, und gleichzeitig durch Entfernen des Inertgases ein reduzierter Druck von 5 mbar bis 500 mbar (absolut) eingestellt wird ("Strippen"),
($\alpha$2) zu dem Gemisch aus Schritt ($\alpha$1) ab dem Zeitpunkt $t_0$ zunächst eine Teilmenge des insgesamt zu dosierenden mindestens einen Alkylenoxids gegeben wird ("Aktivierung"),

($\beta$) anschließend die restliche Menge des mindestens einen Alkylenoxids dem Reaktor zugeführt wird ("Polymerisation"), wobei der Beginn der Alkylenoxidzuführung in ($\beta$) den Zeitpunkt $t_1$ markiert.

Bei allen beschriebenen Ausführungsformen kann die Reaktionstemperatur während der Polymerisation (Schritt (β)) innerhalb der beschriebenen Temperaturgrenzen variiert werden, beispielsweise kann es sich als vorteilhaft herausstellen die Reaktionstemperatur mit zunehmendem Reaktionsfortschritt anzuheben. Ebenfalls kann das mindestens eine Alkylenoxid dem Reaktor auf unterschiedliche Weise zugeführt werden: Möglich ist eine Dosierung in die Gasphase oder direkt in die Flüssigphase, z. B. über ein Tauchrohr oder einen in der Nähe des Reaktorbodens in einer gut durchmischten Zone befindlichen Verteilerring. Die Dosierung in die Flüssigphase ist die bevorzugte Variante. Bei Dosierung in die Flüssigphase sollten die Dosieraggregate selbstleerend ausgelegt sein, beispielsweise durch Anbringen der Dosierbohrungen an der Unterseite des Verteilerrings. Die Alkylenoxide werden dem Reaktor kontinuierlich derart zugeführt, dass die sicherheitstechnischen Druckgrenzen des verwendeten Reaktorsystems nicht überschritten werden. Insbesondere ist bei der Dosierung von ethylenoxidhaltigen Alkylenoxidgemischen oder reinem Ethylenoxid darauf zu achten, dass ein ausreichender Inertgaspartialdruck im Reaktor während der Anfahr- und Dosierphase aufrechterhalten wird. Dieser kann beispielsweise durch ein Edelgas (wie beispielsweise Argon) oder Stickstoff eingestellt werden.

Vorteilhafterweise kann durch apparative Maßnahmen, beispielsweise durch die Montage von Rückschlagklappen, ein Rückströmen von Reaktionsmedium in die alkylenoxidführenden Leitungen und Dosieraggregate bzw. in die die Alkylenoxid-Vorratsbehälter verhindert werden.

Werden mehrere Alkylenoxide im Schritt der Polymerisation dosiert, können die jeweiligen Alkylenoxide dem Reaktor separat oder als Alkylenoxid-Mischung zugeführt werden. Eine Vermischung der Alkylenoxide kann beispielsweise durch ein in der gemeinsamen Dosierstrecke befindliches Mischaggregat erreicht werden ("inline-blending"). Es hat sich auch bewährt, Alkylenoxide pumpendruckseitig in einen beispielsweise über Wärmetauscher geführten Umpumpkreislauf einzeln oder (vor-)gemischt zu dosieren. Für die gute Durchmischung mit dem Reaktionsmedium ist es dann von Vorteil, ein hochscherendes Mischaggregat in den Alkylenoxid-/Reaktionsmediumstrom zu integrieren. Die Temperatur der exothermen Polymerisation (Alkylenoxidadditionsreaktion) wird durch Kühlung auf dem gewünschten Niveau gehalten bzw. auf das gewünschte Niveau eingestellt. Gemäß dem Stand der Technik zur Auslegung von Polymerisationsreaktoren für exotherme Reaktionen (z.B. Ullmann's Encyclopedia of Industrial Chemistry, Vol. B4, pp 167ff, 5th Ed., 1992) erfolgt eine solche Kühlung im Allgemeinen über die Reaktorwand (z.B. Doppelmantel, Halbrohrschlange) sowie mittels weiterer intern im Reaktor und/oder extern im Umpumpkreislauf angeordneter Wärmetauscherflächen, z.B. an Kühlschlangen, Kühlkerzen, Platten- Rohrbündel- oder Mischerwärmetauschern. Diese sollten so ausgelegt sein, dass auch zu Beginn der Dosierphase, d. h. bei kleinem Füllstand, effektiv gekühlt werden kann. Ebenfalls sollten sie in der Lage sein, die ggf. hohen Reaktionswärmen in der Phase schneller Alkylenoxiddosierung, d. h. bis mindestens zum Zeitpunkt des Durchlaufens einer berechneten Äquivalentmolmasse von 8000 g / mol, wirksam abzuführen, bei ggf. hoher Viskosität des reagierenden Reaktorinhalts.

Generell sollte in allen Reaktionsphasen durch Auslegung und Einsatz handelsüblicher Rührorgane für eine gute Durchmischung des Reaktorinhaltes gesorgt werden, wobei hier insbesondere ein- oder mehrstufig angeordnete Rührer oder großflächig über die Füllhöhe wirkende Rührertypen geeignet sind (siehe z. B. Handbuch Apparate; Vulkan-Verlag Essen, 1. Aufl. (1990), S.188 - 208). Technisch besonders relevant ist hierbei eine im Mittel über den gesamten Reaktorinhalt eingetragene spezifische Mischleistung, die im Allgemeinen im Bereich von 0,2 bis 5 W/l liegt, mit entsprechend höheren lokalen Leistungseinträgen im Bereich der Rührorgane selbst und ggf. bei niedrigeren Füllständen. Um eine optimale Rührwirkung zu erzielen, können im Reaktor gemäß allgemeinem Stand der Technik Kombinationen aus Stromstörern (z. B. Flach- oder Rohrstromstörer) und Kühlschlangen (oder Kühlkerzen) angeordnet werden, die sich auch über den Behälterboden erstrecken können. Die Rührleistung des Mischaggregates kann während der Dosierphase auch füllstandsabhängig variiert werden, um in kritischen Reaktionsphasen einen besonders hohen spezifischen Mischleistungseintrag zu gewährleisten. Beispielsweise kann es vorteilhaft sein, feststoffhaltige Dispersionen, die zu Reaktionsbeginn beispielsweise bei der Verwendung von Saccharose vorliegen können, besonders intensiv zu durchmischen. Außerdem sollte insbesondere beim Einsatz fester H-funktioneller Starterverbindungen durch die Wahl des Rühraggregates sichergestellt werden, dass eine ausreichende Dispergierung des Feststoffes im Reaktionsgemisch gewährleistet ist. Bevorzugt werden hier bodengängige Rührstufen sowie besonders zur Suspendierung geeignete Rührorgane eingesetzt. Ferner sollte die Rührergeometrie zur Minderung des Aufschäumens von Reaktionsprodukten beitragen. Das Aufschäumen von Reaktionsgemischen kann beispielsweise nach Ende der Dosier- und Nachreaktionsphase beobachtet werden, wenn Restalkylenoxide zusätzlich im Vakuum bei absoluten Drücken im Bereich von 1 bis 500 mbar entfernt werden. Für solche Fälle haben sich Rührorgane als geeignet herausgestellt, die eine kontinuierliche Durchmischung der Flüssigkeitsoberfläche erzielen. Je nach Anforderung weist die Rührwelle ein Bodenlager und gegebenenfalls weitere Stützlager im Behälter auf. Der Antrieb der Rührerwelle kann dabei von oben oder unten erfolgen (mit zentrischer oder exzentrischer Anordnung der Welle).

Alternativ ist es auch möglich, die notwendige Durchmischung ausschließlich über einen Wärmetauscher geführten Umpumpkreislauf zu erzielen oder diesen zusätzlich zum Rühraggregat als weitere Mischkomponente zu betreiben, wobei der Reaktorinhalt nach Bedarf (typischerweise 1 bis 50 mal pro Stunde) umgepumpt wird. Die mittels Umpumpung, beispielsweise über einen außenliegenden Wärmetauscher über diesen oder bei Rückführung in den Reaktor über eine Düse oder Injektor, eingetragene spezifische Mischleistung beläuft sich ebenfalls auf Werte von im Mittel 0,2 bis 5 W/L, wobei diese auf das im Reaktor und den Umpumpkreislauf am Ende der Reaktionsphase befindliche Flüssigkeitsvolumen bezogen ist.

Für die Durchführung des erfindungsgemäßen Verfahrens hat es sich als vorteilhaft erwiesen, einen spezifischen Mischleistungseintrag zwischen 2 bis 5 W/I zu wählen, oder diesen höheren Bereich ggf. gegen Ende der Ansatzlaufzeit anzustreben.

Für die Durchführung des erfindungsgemäßen Verfahrens sind die unterschiedlichsten Reaktortypen geeignet. Vorzugsweise werden zylinderförmige Behälter eingesetzt, welche ein Höhen-/Durchmesserverhältnis von 1:1 bis 10:1 besitzen. Als Reaktorböden kommen beispielsweise Kugel-, Klöpper-, Flach,- oder Konusböden in Frage.

Nach Ende der Alkylenoxiddosierung oder bei einem Wechsel der Zusammensetzung des dosierten Alkylenoxidgemisches können sich Nachreaktionsphasen anschließen, in denen die Abnahme der Konzentration an unreagiertem Alkylenoxid durch Überwachung des Drucks quantifiziert werden kann. Gegebenenfalls kann das Reaktionsgemisch nach Ende der letzten Nachreaktionsphase von kleinen Mengen an nicht umgesetzten Alkylenoxiden im Vakuum, beispielsweise bei einem absoluten Druck von 1 bis 500 mbar, oder durch Strippen vollständig befreit werden. Durch Strippen werden flüchtige Bestandteile, wie beispielsweise (Rest-)Alkylenoxide, unter Einleiten von Inertgasen und/oder Wasserdampf in die Flüssigphase bei gleichzeitig angelegtem Vakuum (beispielsweise durch Durchleiten von Inertgas bei einem Absolutdruck von 5 bis 500 mbar) entfernt. Das Entfernen flüchtiger Bestandteile, wie beispielsweise nicht umgesetzter Alkylenoxide, entweder im Vakuum oder durch Strippen, erfolgt im Allgemeinen bei Temperaturen von 20 bis 200 °C, bevorzugt bei 50 bis 160 °C und vorzugsweise bei Reaktionstemperatur unter Rühren. Solche Strippvorgänge können auch in sogenannten Strippkolonnen durchgeführt werden, in denen dem Produktstrom ein Inertgas- oder Wasserdampfstrom entgegengeleitet wird. Bevorzugt werden zu diesem Zweck Strippkolonnen mit Füllkörpern oder Einbauten verwendet. Solche Strippvorgänge können auch kontinuierlich durchgeführt werden, indem beispielsweise das nicht gestrippte Material in einem Pufferbehälter gesammelt und aus diesem kontinuierlich der Strippkolonne zugeführt wird. Nach Erreichen von Druckkonstanz in der Nachreaktionsphase und ggf. nach Entfernen flüchtiger Bestandteile durch Vakuum und/oder Strippen kann das Produkt aus dem Reaktor abgelassen werden.

Den nach dem erfindungsgemäßen Verfahren hergestellten Polyoxyalkylenpolyolen können gegebenenfalls Alterungsschutzmittel wie z. B. Antioxidantien zugesetzt werden.

Die nach dem erfindungsgemäßen Verfahren hergestellten Polyoxyalkylenpolyole können allein oder gegebenenfalls im Gemisch mit weiteren isocyanatreaktiven Komponenten mit organischen Polyisocyanaten, gegebenenfalls in Gegenwart von Treibmitteln, gegebenenfalls in Gegenwart von Katalysatoren und gegebenenfalls mit weiteren Zusatzstoffen wie z.B. Zellstabilisatoren zur Reaktion gebracht werden und so als Komponenten von massiven oder geschäumten Polyurethanen, z. B. Polyurethan-Weichschaum wie beispielsweise Polyurethan-Weichblockschaum und Polyurethan-Weichformschaum, dienen. Die nach dem erfindungsgemäßen Verfahren hergestellten Polyoxyalkylenpolyole können insbesondere auch als Komponenten für Kleb- und Dichtstoffmaterialien verwendet werden. Beispielsweise können sie als Vorläuferpolyole für die Herstellung silanterminierter Polyoxyalkylene dienen, die ihrerseits Einsatz in feuchtigkeitshärtenden Dichtstoffsystemen finden können.

Polyurethane, bevorzugt massive oder geschäumte Polyurethane, insbesondere Polyurethan-Weichschäume wie beispielsweise Polyurethan-Weichblockschäume und Polyurethan-Weichformschäume oder Kleb- und Dichtstoffmaterialien, die die nach dem erfindungsgemäßen Verfahren hergestellten Polyoxyalkylenpolyole enthalten, sind ebenfalls Gegenstand der Erfindung.

## Beispiele

Die Bestimmung der OH-Zahlen erfolgte gemäß der Vorschrift der DIN 53240. Die Viskositäten wurden mittels Rotationsviskosimeter (Physica MCR 51, Hersteller: Anton Paar) nach der Vorschrift der DIN 53018 ermittelt.

## Eingesetzte Rohstoffe

Katalysator für die Alkylenoxidaddition (DMC-Katalysator):

Doppelmetallcyanid-Katalysator, enthaltend Zinkhexacyanocobaltat, tert.-Butanol und Polypropylenglykol mit einem zahlenmittleren Molekulargewicht von 1000 g/mol; beschrieben in WO-A 01/80994, Beispiel 6.

ACCLAIM® Polyol 2200N:

Polypropylenglykol mit einer Molmasse von 2000 g / mol, hergestellt über DMC-Katalyse (30 ppm DMC-Katalysator), erhältlich von der Covestro AG.

IRGANOX® 1076:

Octadecyl-3-(3,5-di-tert.butyl-4-hydroxyphenyl)propionat. (BASF SE))

Verfahrensparameter:

Die in den Versuchen eingestellten Rührerdrehzahlen von 320 U/min und 350 U/min entsprachen auf das Reaktorvolumen bezogenen spezifischen Leistungseinträgen von etwa 2,4 W/l bzw. etwa 3 W/l (Gitterrührer).

**Beispiel 1:**

In einen 10 1 Laborautoklaven wurden unter Stickstoffatmosphäre 609,8 g ACCLAIM® Polyol 2200N gegeben. Nach Zugabe von 0,420 g DMC-Katalysator wurde der Inhalt des Autoklaven 30 min bei 123 °C und Rühren (Gitterrührer) mit 320 U/min im Vakuum bei einem absoluten Druck von 100 bis 120 mbar unter Einleiten von 50 ml Stickstoff pro Minute über einen unter dem Flüssigkeitsspiegel liegenden Verteilerring gestrippt. Es wurden sodann, zunächst ebenfalls bei 123 °C und Rühren mit 320 U/min, insgesamt 5390,6 g Propylenoxid innerhalb von 12,08 Stunden in den Kopfraum des Autoklaven eindosiert. Die berechnete Äquivalentmolmasse betrug 9859 g / mol und die berechnete Ziel-OHZ ($OHZ_{Ziel}$) betrug 5,69 mg KOH / g.

Das Propylenoxid (PO) wurde dem Autoklaven unter Verwendung folgenden Dosier- und Temperaturprofils zugeführt:

- 0 bis 25 g PO: Als Funktion der dosierten Masse PO erfolgte eine lineare Steigerung der Dosierrate von 78 g / h auf 117 g / h, Reaktionstemperatur: 123 °C,
- 25 bis 207,2 g PO: Als Funktion der dosierten Masse an PO erfolgte eine lineare Steigerung der Dosierrate von 117 g / h pro auf 816 g / h und eine lineare Steigerung der Reaktionstemperatur von 123 °C auf 130 °C,
- 207,2 bis 2784,2 g PO: Die Dosierrate blieb konstant bei 816 g / h, Reaktionstemperatur: 130 °C,
- 2784,2 bis 4316,5 g PO: Als Funktion der dosierten Masse an PO erfolgte eine lineare Absenkung der Dosierrate von 816 g / h auf 259 g / h, Reaktionstemperatur: 130 °C,
- 4316,5 bis 5390,6 g PO: Als Funktion der dosierten Masse an PO erfolgte eine lineare Absenkung der Dosierrate von 259 g PO pro Stunde auf 183 g PO pro Stunde. Bei 4316,5 g dosiertem PO war eine theoretische Äquivalentmolmasse von 8092 g / mol erreicht worden. Es wurde in dieser letzten Dosierphase PO im Mittel mit 221 g / h, entsprechend 35,6 mol PO/(mol OH x h) x (mg KOH / g) dosiert. Die Reaktionstemperatur betrug 130 °C.

Nach einer Nachreaktionszeit von 20 min. wurde 0,5 h bei 130 °C und bei einem absoluten Druck von 1 mbar ausgeheizt, danach auf 80 °C abgekühlt und es wurden 2,413 g IRGANOX® 1076 zugegeben. Die physikalischen Eigenschaften und weitere analytische Daten sind in Tabelle 1 angegeben.

**Beispiel 2:**

In einen 10 1 Laborautoklaven wurden unter Stickstoffatmosphäre 609,7 g ACCLAIM® Polyol 2200N gegeben. Nach Zugabe von 0,424 g DMC-Katalysator wurde der Inhalt des Autoklaven 30 min bei 123 °C und Rühren (Gitterrührer) mit 320 U/min im Vakuum bei einem absoluten Druck von 100 bis 120 mbar unter Einleiten von 50 ml Stickstoff pro Minute über einen unter dem Flüssigkeitsspiegel liegenden Verteilerring gestrippt. Es wurden sodann, zunächst ebenfalls bei 123 °C und Rühren mit 320 U/min, insgesamt 5390,6 g Propylenoxid innerhalb von 12,08 Stunden in den Kopfraum des Autoklaven eindosiert. Die berechnete Äquivalentmolmasse betrug 9859 g / mol und die berechnete Ziel-OHZ ($OHZ_{Ziel}$) betrug 5,69 mg KOH / g.

Das PO wurde dem Autoklaven unter Verwendung folgenden Dosier- und Temperaturprofils zugeführt:

- 0 bis 25,9 g PO: Als Funktion der dosierten Masse PO erfolgte eine lineare Steigerung der Dosierrate von 78 g / h auf 117 g / h, Reaktionstemperatur: 123 °C,
- 25,9 bis 207,2 g PO: Als Funktion der dosierten Masse an PO erfolgte eine lineare Steigerung der Dosierrate von 117 g / h pro auf 816 g / h und eine lineare Steigerung der Reaktionstemperatur von 123 °C auf 130 °C,
- 207,2 bis 2784,2 g PO: Die Dosierrate blieb konstant bei 816 g / h, Reaktionstemperatur: 130 °C,
- 2784,2 bis 4316,5 g PO: Als Funktion der dosierten Masse an PO erfolgte eine lineare Absenkung der Dosierrate von 816 g / h auf 259 g / h und eine lineare Absenkung der Reaktionstemperatur von 130 °C auf 123 °C,
- 4316,5 bis 5390,6 g PO: Als Funktion der dosierten Masse an PO erfolgte eine lineare Absenkung der Dosierrate von 259 g PO pro Stunde auf 183 g PO pro Stunde. Bei 4316,5 g dosiertem PO war eine theoretische Äquivalentmolmasse von 8094 g / mol erreicht worden. Es wurde in dieser letzten Dosierphase PO im Mittel mit 221 g / h,

**13**

entsprechend 35,6 mol PO/(mol OH x h) x (mg KOH / g) dosiert. Die Reaktionstemperatur betrug 123 °C.

Nach einer Nachreaktionszeit von 20 min. wurde 0,5 h bei 130 °C und bei einem absoluten Druck von 1 mbar ausgeheizt, danach auf 80 °C abgekühlt und es wurden 2,422 g IRGANOX® 1076 zugegeben. Die physikalischen Eigenschaften und weitere analytische Daten sind in Tabelle 1 angegeben.

### Beispiel 3:

In einen 10 1 Laborautoklaven wurden unter Stickstoffatmosphäre 609,6 g ACCLAIM® Polyol 2200N gegeben. Nach Zugabe von 0,427 g DMC-Katalysator wurde der Inhalt des Autoklaven 30 min bei 123 °C und Rühren (Gitterrührer) mit 320 U/min im Vakuum bei einem absoluten Druck von 100 bis 120 mbar unter Einleiten von 50 ml Stickstoff pro Minute über einen unter dem Flüssigkeitsspiegel liegenden Verteilerring gestrippt. Es wurden sodann, zunächst ebenfalls bei 123 °C und Rühren mit 320 U/min, insgesamt 5390,6 g Propylenoxid innerhalb von 10,68 Stunden in den Kopfraum des Autoklaven eindosiert. Die berechnete Äquivalentmolmasse betrug 9859 g / mol und die berechnete Ziel-OHZ ($OHZ_{Ziel}$) betrug 5,69 mg KOH / g.
Das PO wurde dem Autoklaven unter Verwendung folgenden Dosier- und Temperaturprofils zugeführt:

- 0 bis 25,9 g PO: Als Funktion der dosierten Masse PO erfolgte eine lineare Steigerung der Dosierrate von 78 g / h auf 117 g / h, Reaktionstemperatur: 123 °C,
- 25,9 bis 207,2 g PO: Als Funktion der dosierten Masse an PO erfolgte eine lineare Steigerung der Dosierrate von 117 g / h auf 816 g / h und eine lineare Steigerung der Reaktionstemperatur von 123 °C auf 130 °C,
- 207,2 bis 2784,2 g PO: Die Dosierrate blieb konstant bei 816 g / h, Reaktionstemperatur: 130 °C,
- 2784,2 bis 4866,5 g PO: Als Funktion der dosierten Masse an PO erfolgte eine lineare Absenkung der Dosierrate von 816 g / h auf 259 g / h, Reaktionstemperatur: 130 °C,
- 4866,5 bis 5390,6 g PO: Als Funktion der dosierten Masse an PO erfolgte eine lineare Absenkung der Dosierrate von 259 g PO pro Stunde auf 183 g PO pro Stunde. Bei 4866,5 g dosiertem PO war eine theoretische Äquivalentmolmasse von 8999 g / mol erreicht worden. Es wurde in dieser letzten Dosierphase PO im Mittel mit 221 g / h, entsprechend 35,6 mol PO/(mol OH x h) x (mg KOH / g) dosiert. Die Reaktionstemperatur betrug 130 °C.

Nach einer Nachreaktionszeit von 20 min. wurde 0,5 h bei 130 °C und bei einem absoluten Druck von 1 mbar ausgeheizt, danach auf 80 °C abgekühlt und es wurden 2,429 g IRGANOX® 1076 zugegeben. Die physikalischen Eigenschaften und weitere analytische Daten sind in Tabelle 1 angegeben.

### Beispiel 4 (Vergleich):

In einen 10 1 Laborautoklaven wurden unter Stickstoffatmosphäre 609,5 g ACCLAIM® Polyol 2200N gegeben. Nach Zugabe von 0,426 g DMC-Katalysator wurde der Inhalt des Autoklaven 30 min bei 123 °C und Rühren (Gitterrührer) mit 320 U/min im Vakuum bei einem absoluten Druck von 100 bis 120 mbar unter Einleiten von 50 ml Stickstoff pro Minute über einen unter dem Flüssigkeitsspiegel liegenden Verteilerring gestrippt. Es wurden sodann, zunächst ebenfalls bei 123 °C und Rühren mit 320 U/min, insgesamt 5390,7 g Propylenoxid innerhalb von 17,85 Stunden in den Kopfraum des Autoklaven eindosiert. Die berechnete Äquivalentmolmasse betrug 9859 g / mol und die berechnete Ziel-OHZ ($OHZ_{Ziel}$) betrug 5,69 mg KOH / g.
Das PO wurde dem Autoklaven unter Verwendung folgenden Dosier- und Temperaturprofils zugeführt:

- 0 bis 25,9 g PO: Als Funktion der dosierten Masse PO erfolgte eine lineare Steigerung der Dosierrate von 65 g / h auf 97 g / h, Reaktionstemperatur: 123 °C,
- 25,9 bis 207,2 g PO: Als Funktion der dosierten Masse an PO erfolgte eine lineare Steigerung der Reaktionstemperatur von 123 °C auf 130 °C, die PO-Dosierrate wurde bei 97 g / h belassen.
- 207,2 bis 2460,4 g PO: Als Funktion der dosierten Masse an PO erfolgte eine lineare Steigerung der Dosierrate von 97 g / h auf 680 g / h, Reaktionstemperatur: 130 °C,
- 2460,4 g PO bis 2783,7 g PO: Als Funktion der dosierten Masse an PO erfolgte eine lineare Absenkung der Dosierrate von 680 g / h auf 356 g / h und eine lineare Absenkung der Reaktionstemperatur von 130 °C auf 123 °C.
- 2783,7 g PO bis 5390,7 g PO: Die PO-Dosierrate wurde bei 356 g / h belassen, die Reaktionstemperatur betrug 123 °C. Bei 2783,7 g dosiertem PO war eine theoretische Äquivalentmolmasse von 5577 g / mol erreicht worden. Es wurde in dieser letzten Dosierphase PO im Mittel mit 356 g / h, entsprechend 57,3 mol PO/(mol OH x h) x (mg KOH / g) dosiert.

Nach einer Nachreaktionszeit von 20 min. wurde 0,5 h bei 123 °C und bei einem absoluten Druck von 1 mbar ausgeheizt, danach auf 80 °C abgekühlt und es wurden 2,429 g IRGANOX® 1076 zugegeben. Die physikalischen Eigenschaften und weitere analytische Daten sind in Tabelle 1 angegeben.

**Beispiel 5 (Vergleich):**

In einen 10 1 Laborautoklaven wurden unter Stickstoffatmosphäre 609,5 g ACCLAIM® Polyol 2200N gegeben. Nach Zugabe von 0,422 g DMC-Katalysator wurde der Inhalt des Autoklaven 30 min bei 123 °C und Rühren (Gitterrührer) mit 320 U/min im Vakuum bei einem absoluten Druck von 100 bis 120 mbar unter Einleiten von 50 ml Stickstoff pro Minute über einen unter dem Flüssigkeitsspiegel liegenden Verteilerring gestrippt. Es wurden sodann, zunächst ebenfalls bei 123 °C und Rühren mit 320 U/min, insgesamt 5390,7 g Propylenoxid innerhalb von 13,31 Stunden in den Kopfraum des Autoklaven eindosiert. Die berechnete Äquivalentmolmasse betrug 9859 g / mol und die berechnete Ziel-OHZ ($OHZ_{Ziel}$) betrug 5,69 mg KOH / g.
Das PO wurde dem Autoklaven unter Verwendung folgenden Dosier- und Temperaturprofils zugeführt:

- 0 bis 25,9 g PO: Als Funktion der dosierten Masse PO erfolgte eine lineare Steigerung der Dosierrate von 65 g / h auf 97 g / h, Reaktionstemperatur: 123 °C,
- 25,9 bis 207,2 g PO: Als Funktion der dosierten Masse an PO erfolgte eine lineare Steigerung der Reaktionstemperatur von 123 °C auf 130 °C, die PO-Dosierrate wurde linear von 97 g / h auf 194 g / h gesteigert.
- 207,2 bis 798,6 g PO: Als Funktion der dosierten Masse an PO erfolgte eine lineare Steigerung der Dosierrate von 194 g / h auf 432 g / h, Reaktionstemperatur: 130 °C,
- 798,6 g PO bis 2460,4 g PO: Als Funktion der dosierten Masse an PO erfolgte eine lineare Steigerung der Dosierrate von 432 g / h auf 680 g / h, Reaktionstemperatur: 130 °C.
- 2460,4 g PO bis 2784,2 g PO: Die PO-Dosierrate wurde bei 680 g / h belassen, Reaktionstemperatur: 130 °C.
- 2784,2 g PO bis 4316,5 g PO: Als Funktion der dosierten Masse an PO erfolgte eine lineare Senkung der Dosierrate von 680 g / h auf 356 g / h, die Reaktionstemperatur wurde linear gesenkt von 130 °C auf 123 °C.
- 4316,5 g PO bis 5390,7 g PO: Die PO-Dosierrate wurde bei 356 g / h belassen, Reaktionstemperatur: 123 °C. Bei 4316,5 g dosiertem PO war eine theoretische Äquivalentmolmasse von 8096 g / mol erreicht worden. Es wurde in dieser letzten Dosierphase PO im Mittel mit 356 g / h, entsprechend 57,3 mol PO/(mol OH x h) x (mg KOH / g) dosiert.

Nach einer Nachreaktionszeit von 84 min. wurde 0,5 h bei 123 °C und bei einem absoluten Druck von 1 mbar ausgeheizt, danach auf 80 °C abgekühlt und es wurden 2,405 g IRGANOX® 1076 zugegeben. Die physikalischen Eigenschaften und weitere analytische Daten sind in Tabelle 1 angegeben.

**Beispiel** 6 **(Vergleich):**

In einen 10 1 Laborautoklaven wurden unter Stickstoffatmosphäre 609,5 g ACCLAIM® Polyol 2200N gegeben. Nach Zugabe von 0,426 g DMC-Katalysator wurde der Inhalt des Autoklaven 30 min bei 123 °C und Rühren (Gitterrührer) mit 320 U/min im Vakuum bei einem absoluten Druck von 100 bis 120 mbar unter Einleiten von 50 ml Stickstoff pro Minute über einen unter dem Flüssigkeitsspiegel liegenden Verteilerring gestrippt. Es wurden sodann, zunächst ebenfalls bei 123 °C und Rühren mit 320 U/min, insgesamt 5390,8 g Propylenoxid innerhalb von 11,07 Stunden in den Kopfraum des Autoklaven eindosiert. Die berechnete Äquivalentmolmasse betrug 9859 g / mol und die berechnete Ziel-OHZ ($OHZ_{Ziel}$) betrug 5,69 mg KOH / g.
Das PO wurde dem Autoklaven unter Verwendung folgenden Dosier- und Temperaturprofils zugeführt:

- 0 bis 25,9 g PO: Als Funktion der dosierten Masse PO erfolgte eine lineare Steigerung der Dosierrate von 78 g / h auf 117 g / h, Reaktionstemperatur: 123 °C,
- 25,9 bis 207,2 g PO: Als Funktion der dosierten Masse an PO erfolgte eine lineare Steigerung der Reaktionstemperatur von 123 °C auf 130 °C, die PO-Dosierrate wurde linear von 117 g / h auf 233 g / h gesteigert.
- 207,2 bis 798,6 g PO: Als Funktion der dosierten Masse an PO erfolgte eine lineare Steigerung der Dosierrate von 233 g / h auf 518 g / h, Reaktionstemperatur: 130 °C,
- 798,6 g PO bis 2460,4 g PO: Als Funktion der dosierten Masse an PO erfolgte eine lineare Steigerung der Dosierrate von 518 g / h auf 816 g / h, Reaktionstemperatur: 130 °C.
- 2460,4 g PO bis 2784,2 g PO: Die PO-Dosierrate wurde bei 816 g / h belassen, Reaktionstemperatur: 130 °C.
- 2784,2 g PO bis 4316,5 g PO: Als Funktion der dosierten Masse an PO erfolgte eine lineare Senkung der Dosierrate von 816 g / h auf 427 g / h, die Reaktionstemperatur wurde linear gesenkt von 130 °C auf 123 °C.
- 4316,5 g PO bis 5390,8 g PO: Die PO-Dosierrate wurde bei 427 g / h belassen, Reaktionstemperatur: 123 °C. Bei 4316,5 g dosiertem PO war eine theoretische Äquivalentmolmasse von 8096 g / mol erreicht worden. Es wurde in dieser letzten Dosierphase PO im Mittel mit 427 g / h, entsprechend 68,8 mol PO/(mol OH x h) x (mg KOH / g) dosiert.

Nach einer Nachreaktionszeit von 30 min. wurde 0,5 h bei 123 °C und bei einem absoluten Druck von 1 mbar ausgeheizt, danach auf 80 °C abgekühlt und es wurden 2,429 g IRGANOX® 1076 zugegeben. Die physikalischen Eigenschaften und weitere analytische Daten sind in Tabelle 1 angegeben.

**Tabelle 1**

| Beispiel (Gesamte Alkylenoxid -dosierzeit in h) | Für die letzte PO-Dosierphase: $\frac{n_{PO}}{n_{OH} \times \Delta t} \times OHZ_{Ziel}$ [ mol PO/(mol OH x h) x (mg KOH / g)] | Gemessene OH-Zahl [mg KOH / g] | Viskosität bei 25 °C [mPas] |
|---|---|---|---|
| 1 (12,08) | 35,6 | 6,0 | 22600 |
| 2 (12,08) | 35,6 | 5,9 | 23100 |
| 3 (10,68) | 35,6 | 6,0 | 22300 |
| 4, Vergleich (17,85) | 57,3 | 6,0 | 24250 |
| 5, Vergleich (13,31) | 57,3 | 6,0 | 24050 |
| 6, Vergleich (11,07) | 68,8 | 6,0 | 26300 |

### Beispiel 7 (Vergleich):

In einen 10 l Laborautoklaven wurden unter Stickstoffatmosphäre 471,9 g ACCLAIM® Polyol 2200N gegeben. Nach Zugabe von 0,483 g DMC-Katalysator wurde der Inhalt des Autoklaven 30 min bei 130 °C und Rühren (Gitterrührer) mit 350 U/min im Vakuum bei einem absoluten Druck von 100 bis 120 mbar unter Einleiten von 50 ml Stickstoff pro Minute über einen unter dem Flüssigkeitsspiegel liegenden Verteilerring gestrippt. Über diesen Verteilerring wurden sodann, zunächst ebenfalls bei 130 °C und Rühren mit 350 U/min, insgesamt 5528,6 g Propylenoxid mit einer konstanten Dosierrate von 392 g / h, entsprechend 63,0 mol PO/(mol OH x h) x (mg KOH / g), und einer Rührerdrehzahl von 350 U/min eindosiert. Es ergab sich hierbei eine Gesamtdosierzeit für das Propylenoxid von 14,1 h. Nach Dosierung von 50 g Propylenoxid wurde die Reaktionstemperatur innerhalb von 7 min auf 145 °C angehoben und bis zum Ende der Propylenoxiddosierung bei dieser Temperatur gehalten. Nach einer Nachreaktionszeit von 15 min wurde 0,5 h bei 145 °C und bei einem absoluten Druck von 1 mbar ausgeheizt, danach auf 80 °C abgekühlt und 3,0 g IRGANOX® 1076 zugegeben. Die berechnete Äquivalentmolmasse betrug 12740 g / mol und die berechnete Ziel-OHZ (OHZ$_{Ziel}$) betrug 4,4 mg KOH / g. Die physikalischen Eigenschaften und weitere analytische Daten sind in Tabelle 2 angegeben

### Beispiel 8 (Vergleich):

In einen 10 l Laborautoklaven wurden unter Stickstoffatmosphäre 471,5 g ACCLAIM® Polyol 2200N gegeben. Nach Zugabe von 0,479 g DMC-Katalysator wurde der Inhalt des Autoklaven 30 min bei 130 °C und Rühren (Gitterrührer) mit 350 U/min im Vakuum bei einem absoluten Druck von 100 bis 120 mbar unter Einleiten von 50 ml Stickstoff pro Minute über einen unter dem Flüssigkeitsspiegel liegenden Verteilerring gestrippt. Über diesen Verteilerring wurden sodann, zunächst ebenfalls bei 130 °C und Rühren mit 350 U/min, insgesamt 5528,7 g Propylenoxid bei einer Rührerdrehzahl von 350 U/min eindosiert. Es ergab sich hierbei eine Gesamtdosierzeit für das Propylenoxid von 18,3 h. Nach Dosierung von 45 g Propylenoxid wurde die Reaktionstemperatur innerhalb von 7 min auf 145 °C angehoben und bis zum Ende der Propylenoxiddosierung bei dieser Temperatur gehalten. Die berechnete Äquivalentmolmasse betrug 12748 g / mol und die berechnete Ziel-OHZ (OHZ$_{Ziel}$) betrug 4,4 mg KOH / g.

Das PO wurde dem Autoklaven unter Verwendung folgenden Dosierprofils zugeführt:

- 0 bis 2462 g PO: Das PO wurde mit einer konstanten Dosierrate von 352 g / h zugeführt,
- 2462 bis 4028 g PO: Als Funktion der dosierten Masse an PO erfolgte eine lineare Senkung der Dosierrate von 352 g / h auf 315 g / h,
- 4028 bis 5200 g PO: Als Funktion der dosierten Masse an PO erfolgte eine lineare Senkung der Dosierrate von 315 g / h auf 220 g / h,
- 5200 bis 5500 g PO: Als Funktion der dosierten Masse an PO erfolgte eine lineare Absenkung der Dosierrate von 220 g / h auf 130 g / h,
- 5500 bis 5528 g PO: Als Funktion der dosierten Masse an PO erfolgte eine lineare Absenkung der Dosierrate von 130 g PO pro Stunde auf 100 g PO pro Stunde. Bei 3338,4 g dosiertem PO war eine theoretische Äquivalentmolmasse von 8096 g / mol erreicht worden. Es wurde im verbleibenden Rest dieser und den darauffolgenden Dosierphasen PO im Mittel mit 270,4 g / h, entsprechend 43,5 mol PO/(mol OH x h) x (mg KOH / g), dosiert.

Nach einer Nachreaktionszeit von 20 min. wurde 0,5 h bei 145 °C und bei einem absoluten Druck von 1 mbar ausgeheizt, danach auf 80 °C abgekühlt und es wurden 3,010 g IRGANOX® 1076 zugegeben. Die physikalischen Eigenschaften und weitere analytische Daten sind in Tabelle 2 angegeben.

**Beispiel 9:**

In einen 10 l Laborautoklaven wurden unter Stickstoffatmosphäre 471,4 g ACCLAIM® Polyol 2200N gegeben. Nach Zugabe von 0,485 g DMC-Katalysator wurde der Inhalt des Autoklaven 30 min bei 130 °C und Rühren (Gitterrührer) mit 350 U/min im Vakuum bei einem absoluten Druck von 100 bis 120 mbar unter Einleiten von 50 ml Stickstoff pro Minute über einen unter dem Flüssigkeitsspiegel liegenden Verteilerring gestrippt. Über diesen Verteilerring wurden sodann, zunächst ebenfalls bei 130 °C und Rühren mit 350 U/min, insgesamt 5528,7 g Propylenoxid bei einer Rührerdrehzahl von 350 U/min eindosiert. Es ergab sich hierbei eine Gesamtdosierzeit für das Propylenoxid von 12,8 h. Nach Dosierung von 20 g Propylenoxid wurde die Reaktionstemperatur innerhalb von 7 min auf 145 °C angehoben und bis zum Ende der Propylenoxiddosierung bei dieser Temperatur gehalten. Die berechnete Äquivalentmolmasse betrug 12750 g / mol und die berechnete Ziel-OHZ ($OHZ_{Ziel}$) betrug 4,4 mg KOH / g.

Das PO wurde dem Autoklaven unter Verwendung folgenden Dosierprofils zugeführt:

- 0 bis 30 g PO: Als Funktion der dosierten Masse an PO erfolgte eine lineare Steigerung der Dosierrate von 100 g / h auf 200 g / h,
- 30 bis 100 g PO: Als Funktion der dosierten Masse an PO erfolgte eine lineare Steigerung der Dosierrate von 200 g / h auf 1700 g / h,
- 100 bis 3000 g PO: PO wurde mit einer konstanten Dosierrate von 1700 g / h zugeführt,
- 3000 bis 3338,4 g PO: Als Funktion der dosierten Masse an PO erfolgte eine lineare Absenkung der Dosierrate von 1700 g / h auf 230 g / h,
- 3338,4 bis 5528,7 g PO: Als Funktion der dosierten Masse an PO erfolgte eine lineare Absenkung der Dosierrate von 230 g PO pro Stunde auf 200 g PO pro Stunde. Bei 3338,4 g dosiertem PO war eine theoretische Äquivalentmolmasse von 8096 g / mol erreicht worden. Es wurde in dieser letzten Dosierphase PO im Mittel mit 215 g / h, entsprechend 34,6 mol PO/(mol OH x h) x (mg KOH / g), dosiert.

Nach einer Nachreaktionszeit von 20 min. wurde 0,5 h bei 145 °C und bei einem absoluten Druck von 1 mbar ausgeheizt, danach auf 80 °C abgekühlt und es wurden 3,005 g IRGANOX® 1076 zugegeben. Die physikalischen Eigenschaften und weitere analytische Daten sind in Tabelle 2 angegeben.

**Beispiel 10 (Vergleich):**

In einen 10 l Laborautoklaven wurden unter Stickstoffatmosphäre 471,5 g ACCLAIM® Polyol 2200N gegeben. Nach Zugabe von 0,485 g DMC-Katalysator wurde der Inhalt des Autoklaven 30 min bei 130 °C und Rühren (Gitterrührer) mit 350 U/min im Vakuum bei einem absoluten Druck von 100 bis 120 mbar unter Einleiten von 50 ml Stickstoff pro Minute über einen unter dem Flüssigkeitsspiegel liegenden Verteilerring gestrippt. Über diesen Verteilerring wurden sodann, zunächst ebenfalls bei 130 °C und Rühren mit 350 U/min, insgesamt 5528,8 g Propylenoxid bei einer Rührerdrehzahl von 350 U/min eindosiert. Es ergab sich hierbei eine Gesamtdosierzeit für das Propylenoxid von 12,9 h. Nach Dosierung von 23 g Propylenoxid wurde die Reaktionstemperatur innerhalb von 6 min auf 145 °C angehoben und bis zum Ende der Propylenoxiddosierung bei dieser Temperatur gehalten. Die berechnete Äquivalentmolmasse betrug 12749 g / mol und die berechnete Ziel-OHZ ($OHZ_{Ziel}$) betrug 4,4 mg KOH / g.

Das PO wurde dem Autoklaven unter Verwendung folgenden Dosierprofils zugeführt:

- 0 bis 30 g PO: Als Funktion der dosierten Masse an PO erfolgte eine lineare Steigerung der Dosierrate von 100 g / h pro auf 200 g / h,
- 30 bis 100 g PO: Als Funktion der dosierten Masse an PO erfolgte eine lineare Steigerung der Dosierrate von 200 g / h pro auf 500 g / h,
- 100 bis 3000 g PO: PO wurde mit einer konstanten Dosierrate von 500 g / h zugeführt,
- 3000 bis 3338,4 g PO: Als Funktion der dosierten Masse an PO erfolgte eine lineare Absenkung der Dosierrate von 500 g / h auf 390 g / h,
- 3338,4 bis 5528,8 g PO: Als Funktion der dosierten Masse an PO erfolgte eine lineare Absenkung der Dosierrate von 390 g PO pro Stunde auf 360 g PO pro Stunde. Bei 3338,4 g dosiertem PO war eine theoretische Äquivalentmolmasse von 8095 g / mol erreicht worden. Es wurde in dieser letzten Dosierphase PO im Mittel mit 375 g / h, entsprechend 60,4 mol PO/(mol OH x h) x (mg KOH / g), dosiert.

Nach einer Nachreaktionszeit von 20 min. wurde 0,5 h bei 145 °C und bei einem absoluten Druck von 1 mbar ausgeheizt, danach auf 80 °C abgekühlt und es wurden 3,010 g IRGANOX® 1076 zugegeben. Die physikalischen Eigenschaften und weitere analytische Daten sind in Tabelle 2 angegeben.

**Tabelle 2**

| Beispiel (Gesamte Alkylenoxid -dosierzeit in h) | Für die letzte(n) PO-Dosierphase(n): $\frac{n_{PO}}{n_{OH} \times \Delta t} \times OHZ_{Ziel}$ [ mol PO/(mol OH x h) x (mg KOH / g)] | Gemessene OH-Zahl [mg KOH / g] | Viskosität bei 25 °C [mPas] |
|---|---|---|---|
| 7, Vergleich (14,1) | 63,0 | 5,0 | 39000 |
| 8, Vergleich (18,3) | 43,5 | 4,9 | 39950 |
| 9, (12,8) | 34,6 | 4,9 | 36000 |
| 10, Vergleich (12,9) | 60,4 | 4,9 | 41200 |

**Beispiel 11:**

In einen 10 l Laborautoklaven wurden unter Stickstoffatmosphäre 609,5 g ACCLAIM® Polyol 2200 N gegeben. Nach Zugabe von 0,422 g DMC-Katalysator wurde der Inhalt des Autoklaven 30 min bei 123 °C und Rühren (Gitterrührer) mit 320 U/min im Vakuum bei einem absoluten Druck von 100 bis 120 mbar unter Einleiten von 50 ml Stickstoff pro Minute über einen unter dem Flüssigkeitsspiegel liegenden Verteilerring gestrippt. Es wurden sodann, zunächst ebenfalls bei 123 °C und Rühren mit 320 U/min, insgesamt 5289,5 g eines Gemisches aus 91,7 Massen-% PO und 8,3 Massen-% Ethylenoxid (EO) innerhalb von 10,73 Stunden in den Kopfraum des Autoklaven eindosiert. Die berechnete Äquivalentmolmasse betrug 9696 g / mol und die berechnete Ziel-OHZ ($OHZ_{Ziel}$) betrug 5,79 mg KOH / g.
Die Zusammensetzung des Alkylenoxidgemisches wurde während allen Dosierphasen konstant bei 91,7 Massen-% PO und 8,3 Massen-% EO gehalten. Es wurde dem Autoklaven unter Verwendung folgenden Dosier- und Temperaturprofils zugeführt:

- 0 bis 25,4 g Alkylenoxidgemisch: Als Funktion der dosierten Masse an Alkylenoxidgemisch erfolgte eine lineare Steigerung der Dosierrate von 76,5 g / h auf 114,5 g / h, Reaktionstemperatur: 123 °C,
- 25,4 bis 203,3 g Alkylenoxidgemisch: Als Funktion der dosierten Masse an Alkylenoxidgemisch erfolgte eine lineare Steigerung der Dosierrate von 114,5 g / h auf 800,7 g / h und eine lineare Steigerung der Reaktionstemperatur von 123 °C auf 130 °C,
- 203,3 bis 2732,0 g Alkylenoxidgemisch: Die Dosierrate blieb konstant bei 800,7 g / h, Reaktionstemperatur: 130 °C,
- 2732,0 bis 4775,2 g Alkylenoxidgemisch: Als Funktion der dosierten Masse an Alkylenoxidgemisch erfolgte eine lineare Absenkung der Dosierrate von 800,7 g / h auf 254,1 g / h, Reaktionstemperatur: 130 °C,
- 4775,2 bis 5289,5 g Alkylenoxidgemisch: Als Funktion der dosierten Masse an Alkylenoxidgemisch erfolgte eine lineare Absenkung der Dosierrate von 254,1 g Alkylenoxidgemisch pro Stunde auf 179,6 g Alkylenoxidgemisch pro Stunde. Bei 4775,2 g dosiertem Alkylenoxidgemisch war eine theoretische Äquivalentmolmasse von 8850 g / mol erreicht worden. Es wurde in dieser letzten Dosierphase Alkylenoxidgemisch im Mittel mit 217 g / h, entsprechend 36,5 mol Alkylenoxidgemisch/(mol OH x h) x (mg KOH / g) dosiert. Die Reaktionstemperatur betrug 130 °C.

Nach einer Nachreaktionszeit von 20 min. wurde 0,5 h bei 130 °C und bei einem absoluten Druck von 1 mbar ausgeheizt, danach auf 80 °C abgekühlt und es wurden 2,429 g IRGANOX® 1076 zugegeben. Die physikalischen Eigenschaften und weitere analytische Daten sind in Tabelle 3 angegeben.

**Beispiel 12:**

In einen 10 l Laborautoklaven wurden unter Stickstoffatmosphäre 609,5 g ACCLAIM® Polyol 2200 N gegeben. Nach Zugabe von 0,424 g DMC-Katalysator wurde der Inhalt des Autoklaven 30 min bei 123 °C und Rühren (Gitterrührer) mit 320 U/min im Vakuum bei einem absoluten Druck von 100 bis 120 mbar unter Einleiten von 50 ml Stickstoff pro Minute über einen unter dem Flüssigkeitsspiegel liegenden Verteilerring gestrippt. Es wurden sodann, zunächst ebenfalls bei 123 °C und Rühren mit 320 U/min, insgesamt 5390,1 g eines Gemisches aus 70,0 Massen-% PO und 30,0 Massen-% EO innerhalb von 10,73 Stunden in den Kopfraum des Autoklaven eindosiert. Die berechnete Äquivalentmolmasse betrug 9859 g / mol und die berechnete Ziel-OHZ ($OHZ_{Ziel}$) betrug 5,69 mg KOH / g.

Die Zusammensetzung des Alkylenoxidgemisches wurde während allen Dosierphasen konstant bei 70,0 % Massen-% PO und 30,0 Massen-% EO gehalten. Es wurde dem Autoklaven unter Verwendung folgenden Dosier- und Temperaturprofils zugeführt:

- 0 bis 25,9 g Alkylenoxidgemisch: Als Funktion der dosierten Masse an Alkylenoxidgemisch erfolgte eine lineare Steigerung der Dosierrate von 78,0 g / h auf 117,0 g / h, Reaktionstemperatur: 123 °C,
- 25,9 bis 207,1 g Alkylenoxidgemisch: Als Funktion der dosierten Masse an Alkylenoxidgemisch erfolgte eine lineare Steigerung der Dosierrate von 117,0 g / h auf 815,7 g / h und eine lineare Steigerung der Reaktionstemperatur von 123 °C auf 130 °C,
- 207,1 bis 2782,9 g Alkylenoxidgemisch: Die Dosierrate blieb konstant bei 815,7 g / h, Reaktionstemperatur: 130 °C,
- 2782,9 bis 4865,7 g Alkylenoxidgemisch: Als Funktion der dosierten Masse an Alkylenoxidgemisch erfolgte eine lineare Absenkung der Dosierrate von 815,7 g / h auf 259,0 g / h, Reaktionstemperatur: 130 °C,
- 4865,7 bis 5390,1 g Alkylenoxidgemisch: Als Funktion der dosierten Masse an Alkylenoxidgemisch erfolgte eine lineare Absenkung der Dosierrate von 259,0 g Alkylenoxidgemisch pro Stunde auf 183,0 g Alkylenoxidgemisch pro Stunde. Bei 4865,7 g dosiertem Alkylenoxidgemisch war eine theoretische Äquivalentmolmasse von 8999 g / mol erreicht worden. Es wurde in dieser letzten Dosierphase Alkylenoxidgemisch im Mittel mit 221 g / h, entsprechend 39,0 mol Alkylenoxidgemisch/(mol OH x h) x (mg KOH / g) dosiert. Die Reaktionstemperatur betrug 130 °C.

Nach einer Nachreaktionszeit von 20 min. wurde 0,5 h bei 130 °C und bei einem absoluten Druck von 1 mbar ausgeheizt, danach auf 80 °C abgekühlt und es wurden 2,406 g IRGANOX® 1076 zugegeben. Die physikalischen Eigenschaften und weitere analytische Daten sind in Tabelle 3 angegeben.

**Beispiel 13 (Vergleich):**

In einen 10 l Laborautoklaven wurden unter Stickstoffatmosphäre 609,6 g ACCLAIM® Polyol 2200 N gegeben. Nach Zugabe von 0,423 g DMC-Katalysator wurde der Inhalt des Autoklaven 30 min bei 123 °C und Rühren (Gitterrührer) mit 320 U/min im Vakuum bei einem absoluten Druck von 100 bis 120 mbar unter Einleiten von 50 ml Stickstoff pro Minute über einen unter dem Flüssigkeitsspiegel liegenden Verteilerring gestrippt. Es wurden sodann, zunächst ebenfalls bei 123 °C und Rühren mit 320 U/min, insgesamt 5389,6 g eines Gemisches aus 90,0 Massen-% PO und 10,0 Massen-% EO innerhalb von 11,08 Stunden in den Kopfraum des Autoklaven eindosiert. Die berechnete Äquivalentmolmasse betrug 9859 g / mol und die berechnete Ziel-OHZ ($OHZ_{Ziel}$) betrug 5,69 mg KOH / g.

Die Zusammensetzung des Alkylenoxidgemisches wurde während allen Dosierphasen konstant bei 90,0 Massen-% PO und 10,0 Massen-% EO gehalten. Es wurde dem Autoklaven unter Verwendung folgenden Dosier- und Temperaturprofils zugeführt:

- 0 bis 25,9 g Alkylenoxidgemisch: Als Funktion der dosierten Masse an Alkylenoxidgemisch erfolgte eine lineare Steigerung der Dosierrate von 78,0 g / h auf 117,0 g / h, Reaktionstemperatur: 123 °C,
- 25,9 bis 207,2 g Alkylenoxidgemisch: Als Funktion der dosierten Masse an Alkylenoxidgemisch erfolgte eine lineare Steigerung der Dosierrate von 117,0 g / h auf 233,0 g / h und eine lineare Steigerung der Reaktionstemperatur von 123 °C auf 130 °C,
- 207,2 bis 798,6 g Alkylenoxidgemisch: Als Funktion der dosierten Masse an Alkylenoxidgemisch erfolgte eine lineare Steigerung der Dosierrate von 233,0 g / h auf 518,0 g / h, Reaktionstemperatur: 130 °C,
- 798,6 bis 2640,4 g Alkylenoxidgemisch: Als Funktion der dosierten Masse an Alkylenoxidgemisch erfolgte eine lineare Steigerung der Dosierrate von 518,0 g / h auf 816,0 g / h, Reaktionstemperatur: 130 °C,
- 2640,4 bis 2784,2 g Alkylenoxidgemisch: Die Dosierrate blieb konstant bei 816,0 g / h, Reaktionstemperatur: 130 °C,
- 2784,2 bis 4316,6 g Alkylenoxidgemisch: Als Funktion der dosierten Masse an Alkylenoxidgemisch erfolgte eine lineare Absenkung der Dosierrate von 816,0 g / h auf 427,0 g / h und eine lineare Absenkung der Reaktionstemperatur von 130 °C auf 123 °C,
- 4316,6 bis 5389,6 g Alkylenoxidgemisch: Die Alkylenoxidgemischdosierrate wurde bei 427,0 g / h und die Reaktionstemperatur bei 123 °C belassen. Bei 4316,6 g dosiertem Alkylenoxidgemisch war eine theoretische Äquivalentmolmasse von 8095 g / mol erreicht worden. Es wurde in dieser letzten Dosierphase Alkylenoxidgemisch im Mittel mit 427,0 g / h, entsprechend 70,9 mol Alkylenoxidgemisch/(mol OH x h) x (mg KOH / g) dosiert.

Nach einer Nachreaktionszeit von 60 min. wurde 0,5 h bei 123 °C und bei einem absoluten Druck von 1 mbar ausgeheizt, danach auf 80 °C abgekühlt und es wurden 2,421 g IRGANOX® 1076 zugegeben. Die physikalischen Eigenschaften und weitere analytische Daten sind in Tabelle 3 angegeben.

**Beispiel 14 (Vergleich):**

In einen 10 l Laborautoklaven wurden unter Stickstoffatmosphäre 609,5 g ACCLALM® Polyol 2200 N gegeben. Nach Zugabe von 0,425 g DMC-Katalysator wurde der Inhalt des Autoklaven 30 min bei 123 °C und Rühren (Gitterrührer) mit 320 U/min im Vakuum bei einem absoluten Druck von 100 bis 120 mbar unter Einleiten von 50 ml Stickstoff pro Minute über einen unter dem Flüssigkeitsspiegel liegenden Verteilerring gestrippt. Es wurden sodann, zunächst ebenfalls bei 123 °C und Rühren mit 320 U/min, insgesamt 5390,2 g eines Gemisches aus Massen-70,0 % PO und 30,0 Massen-% EO innerhalb von 10,66 Stunden in den Kopfraum des Autoklaven eindosiert. Die berechnete Äquivalentmolmasse betrug 9859 g / mol und die berechnete Ziel-OHZ ($OHZ_{Ziel}$) betrug 5,69 mg KOH / g.

Die Zusammensetzung des Alkylenoxidgemisches wurde während allen Dosierphasen konstant bei 70,0 Massen-% PO und 30,0 Massen-% EO gehalten. Es wurde dem Autoklaven unter Verwendung folgenden Dosier- und Temperaturprofils zugeführt:

- 0 bis 25,9 g Alkylenoxidgemisch: Als Funktion der dosierten Masse an Alkylenoxidgemisch erfolgte eine lineare Steigerung der Dosierrate von 78,0 g / h auf 117,0 g / h, Reaktionstemperatur: 123 °C,
- 25,9 bis 207,1 g Alkylenoxidgemisch: Als Funktion der dosierten Masse an Alkylenoxidgemisch erfolgte eine lineare Steigerung der Dosierrate von 117,0 g / h auf 232,9 g / h und eine lineare Steigerung der Reaktionstemperatur von 123 °C auf 130 °C,
- 207,1 bis 798,6 g Alkylenoxidgemisch: Als Funktion der dosierten Masse an Alkylenoxidgemisch erfolgte eine lineare Steigerung der Dosierrate von 232,9 g / h auf 518,0 g / h, Reaktionstemperatur: 130 °C,
- 798,6 bis 2640,4 g Alkylenoxidgemisch: Als Funktion der dosierten Masse an Alkylenoxidgemisch erfolgte eine lineare Steigerung der Dosierrate von 518,0 g / h auf 816,0 g / h, Reaktionstemperatur: 130 °C,
- 2640,4 bis 2784,1 g Alkylenoxidgemisch: Die Dosierrate blieb konstant bei 816,0 g / h, Reaktionstemperatur: 130 °C,
- 2784,1 bis 4316,6 g Alkylenoxidgemisch: Als Funktion der dosierten Masse an Alkylenoxidgemisch erfolgte eine lineare Absenkung der Dosierrate von 816,0 g / h auf 427,0 g / h und eine lineare Absenkung der Reaktionstemperatur von 130 °C auf 123 °C,
- 4316,6 bis 5390,2 g Alkylenoxidgemisch: Die Alkylenoxidgemischdosierrate wurde bei 427,0 g / h und die Reaktionstemperatur bei 123 °C belassen. Bei 4316,6 g dosiertem Alkylenoxidgemisch war eine theoretische Äquivalentmolmasse von 8097 g / mol erreicht worden. Es wurde in dieser letzten Dosierphase Alkylenoxidgemisch im Mittel mit 427,0 g / h, entsprechend 75,3 mol Alkylenoxidgemisch/(mol OH x h) x (mg KOH / g) dosiert.

Nach einer Nachreaktionszeit von 60 min. wurde 0,5 h bei 123 °C und bei einem absoluten Druck von 1 mbar ausgeheizt, danach auf 80 °C abgekühlt und es wurden 2,421 g IRGANOX® 1076 zugegeben. Die physikalischen Eigenschaften und weitere analytische Daten sind in Tabelle 3 angegeben.

**Tabelle 3**

| Beispiel (Gesamte Alkylenoxiddosierzeit in h) | Für die letzte Alkylenoxidgemisch-Dosierphase: $\dfrac{n_{AO}}{n_{OH} \times \Delta t} \times OHZ_{Ziel}$ [mol AO*/(mol OH x h) x (mg KOH / g)] | Alkylenoxidgemischzusammensetzung (PO / EO als Gewichtsverhältnis in [Massen-% / Massen-%]) | Gemessene OH-Zahl [mg KOH / g] | Viskosität bei 25 °C [mPas]** |
|---|---|---|---|---|
| 11 (10,7) | 36,5 | 91,7 / 8,3 | 6,1 | 23650 |
| 12 (10,7) | 39,0 | 70 / 30 | 6,0 | 36050 |
| 13, Vergleich (11,1) | 70,9 | 90 / 10 | 6,0 | 27050 |
| 14, Vergleich (10,7) | 75,3 | 70 / 30 | 6,4 | 39700 |

*: AO = Alkylenoxidgemisch

**: Bei Polyoxyalkylenpolyolen mit solch hohen Äquivalentmolmassen nimmt die Viskosität mit wachsendem Oxyethylengruppengehalt aufgrund der Erhöhung der Konturlänge der Polyetherketten zu.

**Patentansprüche**

1. Verfahren zur Herstellung eines Polyoxyalkylenpolyols durch Umsetzung mindestens einer H-funktionellen Starterverbindung mit mindestens einem Alkylenoxid in Gegenwart eines Doppelmetallcyanid-Katalysators in einem Reaktor, wobei dem Reaktor ab einem Zeitpunkt $t_1$ bis zu einem Zeitpunkt $t_3$ das mindestens eine Alkylenoxid kontinuierlich oder diskontinuierlich zugeführt wird, und wobei eine Teilmenge der insgesamt zur Herstellung des angestrebten Polyoxyalkylenpolyols zuzuführenden Menge des mindestens einen Alkylenoxids bereits ab einem Zeitpunkt to ≤ $t_1$ dem Reaktor zugeführt werden kann,
**dadurch gekennzeichnet, dass**
ab einem Zeitpunkt $t_2$ die mittlere Dosierrate $r_{AO}$, mit der das mindestens eine Alkylenoxid dem Reaktor zugeführt wird, stets kleiner oder gleich 42 $h^{-1}$ ist,
wobei gilt $t_3 > t_2 > t_1$, und

$$r_{AO} = \frac{n_{AO}}{n_{OH} \cdot \Delta t} \cdot OHZ_{Ziel} /(mg_{KOH} \cdot g^{-1}),$$

mit

○ $\Delta t$: *Zeitraum von $t_2$ bis zum Zeitpunkt der Beendigung der Alkylenoxidzugabe ($t_3$) in h,*
○ $n_{AO}$: *im Zeitraum $\Delta t$ insgesamt zugegebene Stoffmenge n an Alkylenoxid in mol,*
○ $n_{OH}$: *Gesamt-Stoffmenge n an Hydroxylgruppen der eingesetzten Starterverbindung in mol,*

$$OHZ_{Ziel} = \frac{m_S \cdot OHZ_S}{m_R} ;$$

○

○ $OHZ_S$: *Hydroxylzahl der mindestens einen Starterverbindung in mg KOH / g,*
○ $m_S$: *Gesamtmasse der mindestens einen eingesetzten Starterverbindung in g,*
○ $m_R$: *Gesamtmasse aller dem Reaktor zugeführten Reaktanden nach Beendigung der Alkylenoxidzugabe in g,*

wobei der Zeitpunkt $t_2$ so gewählt wird, dass das zu diesem Zeitpunkt im Reaktor vorliegende Polyoxyalkylenpolyol eine berechnete Äquivalentmolmasse $M(t_2)_{\ddot{A}quiv.}^{ber.}$ im Bereich von 8 000 g · $mol^{-1}$ bis 9 500 g · $mol^{-1}$ aufweist,
wobei ferner gilt, dass das mindestens eine Alkylenoxid ab dem Zeitpunkt $t_1$ und

○ mindestens bis zu dem Zeitpunkt, der dem Erreichen einer berechneten Äquivalentmolmasse $M(t)_{\ddot{A}quiv.}^{ber.}$ von 8000 g · $mol^{-1}$ und

○ höchstens bis zu dem Zeitpunkt, der dem Erreichen einer berechneten Äquivalentmolmasse $M(t)_{\ddot{A}quiv.}^{ber.}$ von 9 500 g · $mol^{-1}$ entspricht,
dem Reaktor so zugeführt wird, dass eine Gesamtalkylenoxiddosierzeit, definiert als der Zeitraum $\Delta t_3 o = t_3 - t_0$, von 0,5 h bis 13 h erreicht wird,
wobei gilt

$$M(t)_{\ddot{A}quiv.}^{ber.} = \frac{m_R^t}{m_S \cdot OHZ_S} \cdot (56100 mg_{KOH} \cdot mol^{-1}),$$

mit

○ $m_R^t$: *Gesamtmasse aller dem Reaktor bis zu einem gegebenen Zeitpunkt t zugeführten Reaktanden in g;*
und wobei das Polyoxyalkylenpolyol nach Verstreichen der Gesamtalkylenoxiddosierzeit eine berechnete Äquivalentmolmasse von 9 550 g · $mol^{-1}$ bis 23 000 g · $mol^{-1}$ aufweist.

2. Verfahren gemäß Anspruch 1, **dadurch gekennzeichnet, dass** eine Alkylenoxidteilmenge von bis zu 20 Massen-% Alkylenoxid, bezogen auf die Menge der mindestens einen eingesetzten H-funktionellen Starterverbindung, ab einem Zeitpunkt $t_0$ bis zu einem Zeitpunkt kleiner oder gleich $t_1$, zugeführt wird.

3. Verfahren gemäß Anspruch 1, **dadurch gekennzeichnet, dass**

($\alpha$) in dem Reaktor der Doppelmetallcyanid-Katalysator und die mindestens eine H-funktionelle Starterverbindung vorgelegt werden und bei einer Temperatur von 60 °C bis 160 °C ein Inertgas in das Gemisch aus Doppelmetallcyanid-Katalysator und der mindestens einen H-funktionellen Starterverbindung eingeleitet wird, und gleichzeitig durch Entfernen des Inertgases ein reduzierter Druck von 5 mbar bis 500 mbar (absolut) eingestellt wird ("Strippen"),

($\beta$) anschließend zu dem Gemisch aus Schritt ($\underline{\alpha}$) das mindestens eine Alkylenoxid dem Reaktor zugeführt wird ("Polymerisation"), wobei der Beginn der Alkylenoxidzuführung in ($\beta$) den Zeitpunkt $t_1$ markiert.

4. Verfahren gemäß Anspruch 1, **dadurch gekennzeichnet, dass**

($\alpha$)

($\alpha$1) in dem Reaktor der Doppelmetallcyanid-Katalysator und die mindestens eine H-funktionelle Starterverbindung vorgelegt werden und bei einer Temperatur von 60 °C bis 160 °C ein Inertgas in das Gemisch aus Doppelmetallcyanid-Katalysator und der mindestens einen H-funktionellen Starterverbindung eingeleitet wird, und gleichzeitig durch Entfernen des Inertgases ein reduzierter Druck von 5 mbar bis 500 mbar (absolut) eingestellt wird ("Strippen"),

($\alpha$2) zu dem Gemisch aus Schritt ($\alpha$1) ab dem Zeitpunkt $t_0$ zunächst eine Teilmenge des insgesamt zu dosierenden mindestens einen Alkylenoxids gegeben wird ("Aktivierung"),

($\beta$) anschließend die restliche Menge des mindestens einen Alkylenoxids dem Reaktor zugeführt wird ("Polymerisation"), wobei der Beginn der Alkylenoxidzuführung in ($\beta$) den Zeitpunkt $t_1$ markiert.

5. Verfahren gemäß Anspruch 4, **dadurch gekennzeichnet, dass** in Schritt ($\alpha$2) 2,0 Massen-% bis 20 Massen-%, bezogen auf die Menge der in Schritt ($\alpha$1) eingesetzten mindestens einen H-funktionellen Starterverbindung, des mindestens einen Alkylenoxids zugegeben werden und in Schritt ($\beta$) die verbliebene Teilmenge der insgesamt zur Herstellung des angestrebten Polyoxyalkylenpolyols zuzuführenden Menge des mindestens einen Alkylenoxids zugegeben wird.

6. Verfahren gemäß einem der Ansprüche 1 bis 5, **dadurch gekennzeichnet, dass** die Reaktion mit mindestens einem Alkylenoxid ab dem Zeitpunkt $t_1$ bei einer Temperatur von 110 °C bis 150 °C durchgeführt wird.

7. Verfahren gemäß einem der vorstehenden Ansprüche, **dadurch gekennzeichnet, dass** die mindestens eine Starterverbindung eine Funktionalität von bevorzugt 2 bis 8, besonders bevorzugt von 2 bis 3, aufweist.

8. Verfahren gemäß einem der vorstehenden Ansprüche, **dadurch gekennzeichnet, dass** das mindestens eine Alkylenoxid 2 bis 24 Kohlenstoffatome aufweist.

9. Verfahren gemäß einem der vorstehenden Ansprüche, **dadurch gekennzeichnet, dass** als Alkylenoxid Ethylenoxid, Propylenoxid oder ein Gemisch aus Ethylenoxid und Propylenoxid eingesetzt wird.

10. Verfahren gemäß Anspruch 9, **dadurch gekennzeichnet, dass** als Alkylenoxid Propylenoxid eingesetzt wird.

11. Verfahren gemäß Anspruch 9, **dadurch gekennzeichnet, dass** als Alkylenoxid ein Gemisch aus Propylenoxid und Ethylenoxid mit bis zu 75 Massen-% Ethylenoxid, bezogen auf die Gesamtmasse des Gemisches aus Ethylenoxid und Propylenoxid, eingesetzt wird.

12. Verfahren gemäß einem der vorstehenden Ansprüche, bei dem der Doppelmetallcyanid-Katalysator in einem Massenanteil von 10 ppm bis 1000 ppm, bezogen auf die Gesamtmasse der Reaktionsmischung im Reaktor zum Zeitpunkt $t_3$, verwendet wird.

**Claims**

1. Process for preparing a polyoxyalkylene polyol by reacting at least one H-functional starter compound with at least one alkylene oxide in the presence of a double metal cyanide catalyst in a reactor, by supplying the reactor continuously or discontinuously with the at least one alkylene oxide from a time $t_1$ until a time $t_3$, with possible commencement of supply of the reactor with a portion of the total amount of the at least one alkylene oxide to be supplied for preparation of the desired polyoxyalkylene polyol from an earlier time $t_0 \leq t_1$,

**characterized in that**

from a time $t_2$ the mean metering rate $r_{AO}$ with which the at least one alkylene oxide is supplied to the reactor is always not more than 42 h$^{-1}$, where $t_3 > t_2 > t_1$, and

$$r_{AO} = \frac{n_{AO}}{n_{OH} \cdot \Delta t} \cdot OHN_{target} / (mg_{KOH} \cdot g^{-1}),$$

with

○ $\Delta$t: *period of time from $t_2$ until the time of ending of the alkylene oxide addition ($t_3$) in h,*
○ $n_{AO}$: *molar amount n of alkylene oxide in mol added in total over the period of time $\Delta t$,*
○ $n_{OH}$: *total molar amount n of hydroxyl groups in the starter compound used in mol,*

$$OHN_{target} = \frac{m_S \cdot OHN_S}{m_R} \; ;$$

○
○ $OHN_S$: *hydroxyl number of the at least one starter compound in mg KOH/g,*
○ $m_S$: *total mass of the at least one starter compound used in g,*
○ $m_R$: *total mass of all reactants supplied* to *the reactor after ending of the alkylene oxide addition in g,*

where the time $t_2$ is chosen such that the polyoxyalkylene polyol present in the reactor at this time has a calculated equivalent molar mass $M(t_2)_{equiv.}^{calc.}$ in the range from 8000 g $\cdot$ mol$^{-1}$ to 9500 g $\cdot$ mol$^{-1}$, where, in addition, the at least one alkylene oxide from the time $t_1$ and

○ at least until the time corresponding to the attainment of a calculated equivalent molar mass $M(t)_{equiv.}^{calc.}$ of 8000 g $\cdot$ mol$^{-1}$ and

○ at most until the time corresponding to the attainment of a calculated equivalent molar mass $M(t)_{equiv.}^{calc.}$ of 9500 g $\cdot$ mol$^{-1}$

is supplied to the reactor so as to attain a total alkylene oxide metering time, defined as the period of time $\Delta t_{30} = t_3 - t_0$, of 0.5 h to 13 h, where

$$M(t)_{equiv.}^{calc.} = \frac{m_R^t}{m_S \cdot OHN_S} \cdot (56100 mg_{KOH} \cdot mol^{-1}),$$

with

○ $m_R^t$ : *total mass of all reactants supplied* to *the reactor up* to *a given time* t *in g;*

and where the polyoxyalkylene polyol, after the total alkylene oxide metering time has elapsed, has a calculated equivalent molar mass of 9550 g $\cdot$ mol$^{-1}$ to 23 000 g $\cdot$ mol$^{-1}$.

2. Process according to Claim 1, **characterized in that** an alkylene oxide portion of up to 20% by mass of alkylene oxide, based on the amount of the at least one H-functional starter compound used, is supplied from a time $t_0$ until a time not later than $t_1$.

3. Process according to Claim 1, **characterized in that**

($\alpha$) the reactor is initially charged with the double metal cyanide catalyst and the at least one H-functional starter compound and, at a temperature of 60°C to 160°C, an inert gas is introduced into the mixture of double metal cyanide catalyst and the at least one H-functional starter compound, and a reduced pressure of 5 mbar to 500 mbar (absolute) is simultaneously established by removing the inert gas ("stripping"),

(β) the at least one alkylene oxide is supplied to the reactor subsequent to the mixture from step (α) ("polymerization"), and the commencement of the alkylene oxide supply in (β) marks the time $t_1$.

4. Process according to Claim 1, **characterized in that**

(α)

(α1) the reactor is initially charged with the double metal cyanide catalyst and the at least one H-functional starter compound and, at a temperature of 60°C to 160°C, an inert gas is introduced into the mixture of double metal cyanide catalyst and the at least one H-functional starter compound, and a reduced pressure of 5 mbar to 500 mbar (absolute) is simultaneously established by removing the inert gas ("stripping"),
(α2) first a portion of the total amount of the at least one alkylene oxide to be metered in is added to the mixture from step (α1) from the time to ("activation"),

(β) then the remaining amount of the at least one alkylene oxide is supplied to the reactor ("polymerization"), and the commencement of the alkylene oxide supply in (β) marks the time $t_1$.

5. Process according to Claim 4, **characterized in that**, in step (α2), 2.0% by mass to 20% by mass, based on the amount of the at least one H-functional starter compound used in step (α1), of the at least one alkylene oxide is added and, in step (β), the remaining portion of the total amount of the at least one alkylene oxide to be supplied for preparation of the desired polyoxyalkylene polyol is added.

6. Process according to any of Claims 1 to 5, **characterized in that** the reaction with at least one alkylene oxide is conducted from the time $t_1$ at a temperature of 110°C to 150°C.

7. Process according to any of the preceding claims, **characterized in that** the at least one starter compound has a functionality of preferably 2 to 8, more preferably of 2 to 3.

8. Process according to any of the preceding claims, **characterized in that** the at least one alkylene oxide has 2 to 24 carbon atoms.

9. Process according to any of the preceding claims, **characterized in that** the alkylene oxide used is ethylene oxide, propylene oxide or a mixture of ethylene oxide and propylene oxide.

10. Process according to Claim 9, **characterized in that** the alkylene oxide used is propylene oxide.

11. Process according to Claim 9, **characterized in that** the alkylene oxide used is a mixture of propylene oxide and ethylene oxide with up to 75% by mass of ethylene oxide, based on the total mass of the mixture of ethylene oxide and propylene oxide.

12. Process according to any of the preceding claims, in which the double metal cyanide catalyst is used in a proportion by mass of 10 ppm to 1000 ppm, based on the total mass of the reaction mixture in the reactor at the time $t_3$.

**Revendications**

1. Procédé de fabrication d'un polyoxyalkylène-polyol par mise en réaction d'au moins un composé de départ à fonction H avec au moins un oxyde d'alkylène en présence d'un catalyseur de cyanure de deux métaux dans un réacteur, ledit au moins un oxyde d'alkylène étant introduit de manière continue ou discontinue dans le réacteur à partir d'un moment $t_1$ jusqu'à un moment $t_3$, et une quantité partielle de la quantité dudit au moins un oxyde d'alkylène à introduire au total pour la fabrication du polyoxyalkylène-polyol visé pouvant déjà être introduite dans le réacteur à partir d'un moment $t_0 \leq t_1$,
**caractérisé en ce que**
à partir d'un moment $t_2$, le taux d'ajout moyen $r_{AO}$ avec lequel ledit au moins un oxyde d'alkylène est introduit dans le réacteur est toujours inférieur ou égal à 42 $h^{-1}$,
avec $t_3 > t_2 > t_1$, et

$$r_{AO} = \frac{n_{AO}}{n_{OH} \cdot \Delta t} \cdot OHZ_{cible} \; / \; (mg_{KOH} \cdot g^{-1}) \, ,$$

avec

- $\Delta t$ : durée depuis $t_2$ jusqu'au moment de la fin de l'ajout de l'oxyde d'alkylène ($t_3$) en h,
- $n_{AO}$ : quantité de matière n d'oxyde d'alkylène ajoutée au total pendant la durée $\Delta t$ en moles,
- $n_{OH}$ : quantité de matière totale n de groupes hydroxyle du composé de départ utilisé en moles,

$$OHZ_{cible} = \frac{m_S \cdot OHZ_S}{m_R} \quad ;$$
-
- $OHZ_S$ : indice hydroxyle dudit au moins un composé de départ en mg de KOH/g,
- $m_S$ : masse totale dudit au moins un composé de départ utilisé en g,
- $m_R$ : masse totale de tous les réactifs introduits dans le réacteur après la fin de l'ajout de l'oxyde d'alkylène en g,

le moment $t_2$ étant choisi de telle sorte que le polyoxyalkylène-polyol présent à ce moment dans le réacteur présente une masse molaire équivalente calculée $M(t_2)^{calc.}_{équ.}$ dans la plage allant de 8 000 g·mol$^{-1}$ à 9 5000 g·mol$^{-1}$,

et ledit au moins un oxyde d'alkylène étant introduit dans le réacteur à partir du moment $t_1$ et

- au moins jusqu'au moment qui correspond à l'atteinte d'une masse molaire équivalente calculée $M(t)^{calc.}_{équ.}$ de 8 000 g·mol$^{-1}$ et

- au plus jusqu'au moment qui correspond à l'atteinte d'une masse molaire équivalente calculée $M(t)^{calc.}_{équ.}$ de 9 500 g·mol$^{-1}$

de telle sorte qu'un temps d'ajout de l'oxyde d'alkylène total, défini comme la durée $\Delta t_{30} = t_3 - t_0$, de 0,5 h à 13 h soit atteint,

avec

$$M(t)^{calc.}_{équ.} = \frac{m_R^t}{m_S \cdot OHZ_S} \cdot (56100 \, mg_{KOH} \cdot mol^{-1}) \, ,$$

avec

- $m_R^t =$ masse totale de tous les réactifs introduits dans le réacteur jusqu'à un moment donné t en g ;

et le polyoxyalkylène-polyol présentant après l'écoulement du temps d'ajout de l'oxyde d'alkylène total une masse molaire équivalente calculée de 9 550 g·mol$^{-1}$ à 23 000 g·mol$^{-1}$.

**2.** Procédé selon la revendication 1, **caractérisé en ce qu'**une quantité partielle d'oxyde d'alkylène de jusqu'à 20 % en masse d'oxyde d'alkylène, par rapport à la quantité dudit au moins un composé de départ à fonction H utilisé, est introduite à partir d'un moment $t_0$ jusqu'à un moment inférieur ou égal à $t_1$.

**3.** Procédé selon la revendication 1, **caractérisé en ce que**

($\alpha$) le catalyseur de cyanure de deux métaux et ledit au moins un composé de départ à fonction H sont chargés initialement dans le réacteur et, à une température de 60 °C à 160 °C, un gaz inerte est introduit dans le mélange du catalyseur de cyanure de deux métaux et dudit au moins un composé de départ à fonction H, et, simultanément, une pression réduite de 5 mbar à 500 mbar (absolue) est ajustée par élimination du gaz inerte (« extraction »), puis

($\beta$) ledit au moins un oxyde d'alkylène est introduit dans le mélange de l'étape ($\alpha$) dans le réacteur (« polymérisation »), le début de l'introduction de l'oxyde d'alkylène en ($\beta$) marquant le moment $t_1$.

**4.** Procédé selon la revendication 1, **caractérisé en ce que**

($\alpha$)

($\alpha$1) le catalyseur de cyanure de deux métaux et ledit au moins un composé de départ à fonction H sont chargés initialement dans le réacteur et, à une température de 60 °C à 160 °C, un gaz inerte est introduit dans le mélange du catalyseur de cyanure de deux métaux et dudit au moins un composé de départ à fonction H, et, simultanément, une pression réduite de 5 mbar à 500 mbar (absolue) est ajustée par élimination du gaz inerte (« extraction »),

($\alpha$2) une quantité partielle dudit au moins un oxyde d'alkylène à ajouter au total est tout d'abord ajoutée au mélange de l'étape ($\alpha$1) à partir du moment $t_0$ (« activation »), puis

($\beta$) la quantité restante dudit au moins un oxyde d'alkylène est introduite dans le réacteur (« polymérisation »), le début de l'introduction de l'oxyde d'alkylène en ($\beta$) marquant le moment $t_1$.

5. Procédé selon la revendication 4, **caractérisé en ce qu'**à l'étape ($\alpha$2), 2,0 % en masse à 20 % en masse, par rapport à la quantité dudit au moins un composé de départ à fonction H utilisé à l'étape ($\alpha$1), dudit au moins un oxyde d'alkylène est ajoutée, et à l'étape ($\beta$), la quantité partielle restante dudit au moins un oxyde d'alkylène à introduire au total pour la fabrication du polyoxyalkylène-polyol visé est ajoutée.

6. Procédé selon l'une quelconque des revendications 1 à 5, **caractérisé en ce que** la réaction avec au moins un oxyde d'alkylène à partir du moment $t_1$ est réalisée à une température de 110 °C à 150 °C.

7. Procédé selon l'une quelconque des revendications précédentes, **caractérisé en ce que** ledit au moins un composé de départ présente de préférence une fonctionnalité de 2 à 8, de manière particulièrement préférée de 2 à 3.

8. Procédé selon l'une quelconque des revendications précédentes, **caractérisé en ce que** ledit au moins un oxyde d'alkylène comprend 2 à 24 atomes de carbone.

9. Procédé selon l'une quelconque des revendications précédentes, **caractérisé en ce que** de l'oxyde d'éthylène, de l'oxyde de propylène ou un mélange d'oxyde d'éthylène et d'oxyde de propylène est utilisé en tant qu'oxyde d'alkylène.

10. Procédé selon la revendication 9, **caractérisé en ce que** de l'oxyde de propylène est utilisé en tant qu'oxyde d'alkylène.

11. Procédé selon la revendication 9, **caractérisé en ce qu'**un mélange d'oxyde de propylène et d'oxyde d'éthylène contenant jusqu'à 75 % en masse d'oxyde d'éthylène, par rapport à la masse totale du mélange d'oxyde d'éthylène et d'oxyde de propylène, est utilisé en tant qu'oxyde d'alkylène.

12. Procédé selon l'une quelconque des revendications précédentes, selon lequel le catalyseur de cyanure de deux métaux est utilisé en une proportion en masse de 10 ppm à 1 000 ppm, par rapport à la masse totale du mélange réactionnel dans le réacteur au moment $t_3$.

FIG. 1

FIG. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5470813 A
- EP 700949 A
- EP 743093 A
- EP 761708 A
- WO 9740086 A
- WO 9816310 A
- WO 0047649 A
- DE 4117679 A
- US 5096993 A
- WO 9104997 A
- EP 1316573 A
- EP 0425694 A
- WO 2013000915 A
- EP 1525244 A
- US 3404109 A
- US 3829505 A
- US 3941849 A
- US 5158922 A
- EP 2571922 A1

- JP 4145123 A
- WO 0139883 A
- WO 0180994 A
- US 4987271 A
- DE 3132258 A
- EP 406440 A
- US 5391722 A
- US 5099075 A
- US 4721818 A
- US 4877906 A
- EP 385619 A
- US 3538043 A
- US 4500704 A
- US 5032671 A
- US 6646100 A
- EP 222453 A
- WO 2008013731 A
- WO 9914258 A

**In der Beschreibung aufgeführte Nicht-Patentliteratur**

- Ullmann's Encyclopedia of Industrial Chemistry. 1992, vol. B4, 167ff

- B. Handbuch Apparate. Vulkan-Verlag Essen, 1990, 188-208